(19) Europäisches Patentamt / European Patent Office / Office européen des brevets

(11) **EP 2 936 743 B1**

(12) # EUROPEAN PATENT SPECIFICATION

(45) Date of publication and mention of the grant of the patent:
**14.10.2020 Bulletin 2020/42**

(21) Application number: **12890395.2**

(22) Date of filing: **31.12.2012**

(51) Int Cl.:
***H04B 17/318*** *(2015.01)* ***H04L 5/00*** *(2006.01)*
***H04W 36/00*** *(2009.01)* *H04W 84/04 (2009.01)*

(86) International application number:
**PCT/US2012/072279**

(87) International publication number:
**WO 2014/098921 (26.06.2014 Gazette 2014/26)**

(54) **METHOD AND APPARATUS FOR ASSISTED SERVING CELL CONFIGURATION IN A HETEROGENEOUS NETWORK ARCHITECTURE**

VERFAHREN UND VORRICHTUNG FÜR UNTERSTÜTZTE DIENSTZELLENKONFIGURATION IN EINER HETEROGENEN NETZWERKARCHITEKTUR

PROCÉDÉ ET APPAREIL DE CONFIGURATION DE CELLULES DE DESSERTE ASSISTÉES DANS UNE ARCHITECTURE DE RÉSEAU HÉTÉROGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2012 US 201213720750**

(43) Date of publication of application:
**28.10.2015 Bulletin 2015/44**

(73) Proprietor: **BlackBerry Limited**
**Waterloo, ON N2K 0A7 (CA)**

(72) Inventors:
- **CAI, Zhijun**
  **Ashburn, VA 20148 (US)**
- **SONG, Yi**
  **Irving, TX 75039 (US)**
- **BONTU, Chandra Sekhar**
  **Kanata, ON K2K 3K1 (CA)**

(74) Representative: **Hanna Moore + Curley**
**Garryard House**
**25/26 Earlsfort Terrace**
**Dublin 2, D02 PX51 (IE)**

(56) References cited:
**EP-A1- 2 713 653** **WO-A1-2011/035420**
**WO-A1-2011/137784** **US-A1- 2009 238 098**
**US-A1- 2012 263 145** **US-A1- 2012 329 188**

- **"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP DRAFT; 36300-B30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 September 2012 (2012-09-24), XP050664345, Retrieved from the Internet: URL:http://www.3gpp.org/ftp/tsg_ran/WG2_RL2/Specifications/201209_final_specs_after_RAN_57/ [retrieved on 2012-09-24]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE DISCLOSURE

The present disclosure relates to small cells operating in conjunction with a macro cell, and in particular relates to initial access, idle mode procedures, Layer 1 control channel aspects, Layer 2/3 aspects and hybrid automatic repeat request (HARQ) procedures for a user equipment (UE) connected simultaneously to a plurality of serving cells.

### BACKGROUND

A heterogeneous network may include a high power node with one or more low power nodes co-existing with the high power node. Low power nodes form small cells such as pico cells, femto cells and relay cells while high power nodes form macro cells, which in general have a much larger cell coverage than the small cells.

In order to improve capacity and cell edge performance of the macro cells, low power nodes may be introduced within the macro cell to form the small cells. In some scenarios, the density of the small cells may be quite high. In this scenario, mobility and associated overhead could become a concern for a UE, especially for users with medium to high mobility. For example, user equipment (UE) travelling quickly may experience frequent handovers when moving across the small cells. Specifically, as the UE moves closer to a small cell, handover conditions indicate to the UE that the UE should handover to that small cell. However, when the small cell has a small coverage, fast changing radio conditions exist at the small cell edge and due to the frequent handovers, handover failure rates could increase, thereby impacting overall mobility performance.

Further, interference issues exist between the high power and low power cells. To remove interference, one deployment could be that the small cells use a different frequency layer from the macro cells. For example, the macro cells may use a 700Mhz frequency band while small cells use a 3.5Ghz frequency band. However this is merely an example. Such deployment can be referred to as an inter-site carrier aggregation (CA) based scheme. In accordance with this deployment, interference issues may be relieved at least between the macro cells and the small cells.

EP2713653, published on 28 September 2012, discloses a method to handover a UE from a first to a second base station, the first base station being connected to a mobility management entity (MME) for the control plane and to a serving gateway for the user plane and providing a user plane radio protocol stack per radio access bearer and a control plane radio protocol stack to the UE. The second base station controls a cell overlaid by a cell under control of the first base station and connects to the MME for the control plane and to the serving gateway for the user plane. The user plane radio protocol stack is relocated to the said second base station for at least a radio access bearer so that the corresponding user plane traffic is delivered to the UE through the user plane radio protocol stack of the second base station. The UE is reconfigured via a radio resource control connection according to the relocation so that the UE sends the user plane uplink data of the radio access bearer to the second base station only and the control plane uplink data to the first base station only. A user plane switch of the at least radio access bearer towards the serving gateway is performed through the MME to update the user plane from the second base station and keep unchanged the control plane from the first base station towards the MME.

### SUMMARY

According to the present invention, there is provided a method for adding or changing to an assisted serving cell for a user equipment and a corresponding macro cell according to the appended independent claims.

### BRIEF DESCRIPTION OF THE DRAWINGS

The present disclosure will be better understood with reference to the drawings, in which:

**Figure 1** is a block diagram showing an example heterogeneous network;

**Figure 2** is a block diagram showing communication to a user equipment in a macro cell but close to a closed subscriber group cell the user equipment is not a member of;

**Figure 3** is a block diagram showing communication to a user equipment in a pico cell but close to a the pico cell edge;

**Figure 4** is block diagram showing almost blank subframes on a macro cell;

**Figure 5** is a plot showing signal strength of a source and target cell and providing a handover region;

**Figure 6** is a block diagram showing example control and user plane communications between a user equipment, a macro cell and a small cell;

**Figure 7** is a block diagram showing an example user equipment camping scheme in which system information is provided from the macro cell;

**Figure 8** is a process diagram of an example process for determining which cell a user equipment can camp on;

**Figure 9** is a data flow diagram showing an example assisted serving cell addition procedure;

**Figure 10** is a data flow diagram showing an example assisted serving cell activation and deactivation due to user equipment mobility;

**Figure 11** is a block diagram showing discontinuous reception configurations for a macro cell and assisted serving cell;

**Figure 12** is a block diagram showing an example of signaling for a macro cell flowing through a small cell;

**Figure 13** is a block diagram showing an example of delayed physical downlink shared channel transmissions using cross carrier scheduling;

**Figure 14** is an example data flow diagram showing uplink timing alignment with a small cell;

**Figure 15** is an example data flow diagram showing uplink timing alignment using user equipment initiated random access in an assisted cell;

**Figure 16** is an example user plane protocol stack between a UE and an assisted serving cell;

**Figure 17** is an example control plane protocol stack between a UE, a macro cell and an assisted serving cell;

**Figure 18** is a further example control plane protocol stack between a UE, a macro cell and an assisted serving cell;

**Figure 19** is an example user plane protocol stack between a UE and an assisted serving cell where the assisted serving cell has no S1 interface;

**Figure 20** is an example control plane protocol stack between a UE and a macro cell where an assisted serving cell has no S1 interface;

**Figure 21** is an example user plane protocol stack between a UE, an assisted serving cell and a macro cell, where the assisted serving cell has no PDCP layer;

**Figure 22** is an example local radio resource control protocol between a macro cell and a layer 2 assisted serving cell having no S1 interface;

**Figure 23** is an example block diagram of downlink/uplink HARQ signaling between a macro cell and a UE;

**Figure 24** is an example block diagram showing synchronous operations and HARQ process assignments between a macro cell, UE and a small cell;

**Figure 25** is a simplified block diagram of an example network element; and

**Figure 26** is a block diagram of an example user equipment.

Reference is now made to **Figure 1**, which shows an example of a dense Third Generation Partnership Project (3GPP) Long Term Evolution-Advanced (LTE-A) heterogeneous network deployment scenario. Such deployment may be used to increase capacity and enhance coverage of a macro cell, for example.

Capacity increase allows for more data transfer within a network. Data capacity requirements increase significantly over time, and may require doubling the data capacity every year. Some forecasts see a 1000 times capacity increase demand in cellular networks by the year 2020.

Further, coverage issues at cell edges of traditional macro cells are always a bottleneck for both downlink and the uplink.

One possible technique to resolve coverage and capacity issues is the deployment of a heterogeneous network where small cells such as pico cells, femto cells and relays may enhance both the network throughput and the cell edge coverage. In particular, referring to **Figure 1,** a macro eNB **110** has a coverage area **112.**

Some UEs, shown as UEs **120,** communicate directly with macro eNB **110.** However, in order to offload some UEs from macro eNB **110,** small cells are introduced within macro cell coverage area **112.**

In particular, in the example of **Figure 1,** pico cells **130** provide small cell coverage. Pico cells **130** may be located near the cell edge or may be located in high density or high usage areas to offload some data capacity to the pico cells.

In the embodiment of **Figure 1,** pico cells **130** include a backhaul **132** such as a fiber or microwave backhaul, for example, between macro eNB **110** and the pico eNB. UEs **134** communicate directly with pico cells **130.** The backhaul could be wireless or wire line.

In other cases, a relay **140** may be connected to either macro eNB **110** or to a pico eNB **130.** As will be appreciated, relays provide enhanced coverage area or enhanced throughput for UEs **146** connected to them.

In other embodiments, femto cells **150** may be located within the macro cell coverage area **112** and be connected to UEs **152.**

While the present disclosure is described with regard to the Long Term Evolution (LTE) network architecture, the present disclosure is not limited to such a network architecture and could include other network architectures as well. The use of LTE is merely meant as an example.

Based on **Figure 1** above, a heterogeneous network is a network which, in some embodiments, is designed to provide uniform coverage or capacity to serve a non-uniform distribution of users and needs. It includes the macro cells and the low-power nodes such as pico cells, femto cells, and relays. The macro cells overlay the low power nodes or small cells, sharing the same frequency or having different frequencies. Small cells are utilized to offload capacity from macro cells, improve indoor and cell edge performance, among other functionalities. Thus, the 3$^{rd}$ Generation Partnership Project working groups are studying heterogeneous networks for performance enhancement enablers in LTE-A.

In heterogeneous network deployments, inter-cell interference coordination (ICIC) is one consideration. To help with ICIC, time domain based resource sharing or coordination has been adopted and referred to as enhanced ICIC (eICIC). For eICIC, the interfering node adopts an Almost Blank Subframe (ABS) at certain points and co-ordinates this with the interfered with cells so that the interfered with cells may provide vital information to UEs connected to the cells during the Almost Blank Subframe in order to avoid interference from the interfering cell for such information.

There are two main deployment scenarios where eICIC is utilized. The first is a Closed Subscriber Group (Femto cell) scenario. In this case, a dominant interference condition may happen when non-member users are in close proximity to the Closed Subscriber Group Cell. Reference is now made to **Figure 2.**

As seen in **Figure 2,** a macro eNB **210** includes a coverage area **212.** Similarly, a CSG eNB **220** has a coverage area **222.** A UE **230** that is not a member of the Closed Subscriber Group moves close to the CSG eNB **120** and thus receives significant interference from the CSG eNB **220.**

Typically, Physical Downlink Control Channel (PDCCH) reception at a non-member UE **230** is severely interfered with by the downlink transmissions from the CSG eNB **220** to its member UEs. Interference to PDCCH reception of the macro eNB **210** for non-member UEs has a detrimental impact on both the uplink and downlink data transfer between the UE **230** and the macro eNB **210.**

Additionally, other downlink control channels and reference signals, from both the macro cell and neighbor cells, that may be used for cell measurements and radio link monitoring are also interfered with by the downlink transmission from the CSG eNB **220** to its member UEs.

Depending on the network deployment and strategy, it may not be possible to divert the users suffering from inter-cell interference to another Evolved-Universal Terrestrial Radio Access (E-UTRA) carrier or other Radio Access Technology (RAT). In this case, time domain ICIC may be used to allow such non-member UEs to remain served by the macro eNB **210** on the same frequency layer. In this case, interference may be mitigated by the CSG eNB **220** utilizing an ABS to protect some of the corresponding macro cell's subframes from interference.

A non-member UE **130** may be signaled to utilize the protected resources for radio resource measurements (RRM), radio link monitoring (RLM) and Channel State Information (CSI) measurements for the serving cell, allowing the UE to continue to be served by the macro cell under otherwise strong interference from the CSG cell.

A second deployment scenario that eICIC may be utilized with is described below with regard to **Figure 3.**

In the embodiment of **Figure 3,** a macro eNB **310** has a coverage area **312.** A pico eNB **320** has a coverage area **322.** A UE **330** is connected to pico eNB **320** but is close to the pico cell edge.

In the scenario of **Figure 3,** time domain ICIC may be utilized for pico cell users who are served in the edge of the serving pico cell. The pico UE may be still connected to the pico eNB **320** for the purpose of traffic offloading from the macro eNB **310** to pico eNB **320.** Typically, the PDCCH would be severely interfered with by the downlink transmissions from the macro cell. In addition, other downlink control channels and reference signals from both the pico cell and neighbor cells, which may be used for cell measurements and radio link monitoring, are also interfered by the downlink transmission from the macro cell.

Time domain ICIC may be utilized to allow a UE such as UE **330** to remain served by the pico eNB **320** at an extended range on the same frequency layer. Such interference may be mitigated by the macro cell utilizing ABS to protect the corresponding pico cell's subframes from interference. A UE served by a pico cell uses the protected resources during the macro cell ABS for radio resource measurements, radio link monitoring and channel state information measurements for the serving pico cell and possibly for neighboring cells.

For time domain ICIC, subframe utilization across different cells is coordinated in time through either backhaul signaling or Over the Air Management (OAM) configuration of the ABS patterns. The ABSs in the aggressor cell are used to protect resources in subframes in the victim cell receiving strong inter-cell interference from the aggressor cell.

ABSs are subframes with reduced transmit power, and may include no transmissions in some cases, on some of the physical channels. In other embodiments the ABS has significantly reduced activity. The eNB ensures backward compatibility towards UEs by transmitting the necessary control channel and physical signals as well as System Information Patterns based on ABSs signaled to the UE to restrict the UE measurements to specific subframes, called time domain measurement resource restrictions. There are different patterns depending on the type of measured cell, including serving and neighboring cells, and the measurement type, including RRM, RLM, among others.

One example of an ABS patterns for a pico scenario is shown below with regard to **Figure 4.** In particular, **Figure 4** shows a macro layer **410** and a pico layer **420.** Subframes with normal transmissions are shown with the shading at reference numeral **430** whereas subframes that are almost blank subframes are shown with the shading at reference numeral **432.**

In the example of **Figure 4,** a macro eNB is the aggressor cell and configures and transfers the ABS patterns to the pico eNB, which is the victim cell. The macro eNB schedules no data transmissions or low-power data transmissions in the ABS subframes to protect UEs served by the pico eNB at the cell edge of the pico cell.

The pico eNB may schedule transmission to and from the UEs in the cell center regardless of the ABS subframes because the interference from the macro cell is sufficiently low. Meanwhile the pico eNB may schedule transmission to and from the UEs at the edge of the pico cell only during the ABS subframe transmission from macro layer **410.**

In particular, during the subframes marked with reference numeral **440,** the pico node only schedules user equipments without excessive range extension, since the macro eNB is also active in these subframes.

Conversely, during the subframes marked with reference numeral **442,** the macro eNB has almost blank subframes and the pico node can, in addition to UEs that are without excessive range extension, schedule users with large range extension offsets that would otherwise not be schedulable due to too high interference from the macro layer.

One drawback of dense heterogeneous networks relates to mobility. Due to the different cell types in the heterogeneous network environment, mobility situation is more complicated than in a homogeneous network. Reference is now made to **Figure 5,** which shows the handover region between the source cell and the target. The handover region is defined as the region between the point of an A3 event being triggered, to the point that radio link quality from the source cell is not sufficient for receiving a handover command.

In **Figure 5,** the signal strength from source cell is shown by line **510** and the signal strength from the target cell is shown by line **512.** The UE is connected to the source cell and is being transferred to a target cell.

Handover should not occur prior to a point shown by reference numeral **520.** The point at reference numeral **520** is designated as "A" and is defined where the A3 event is triggered. The A3 event is triggered when the target power, designated as $P_{target}$, minus the source power, designated as $P_{source}$, is greater than or equal to the A3_offset. This is shown with **equation 1** below.

$$P_{target}-P_{source} \geq A3_offset \qquad (1)$$

Handover should also not occur any later than the position shown by reference numeral **530** and designated as "B" in the example of **Figure 5.** At the point designated by reference numeral **530** the PDCCH of the serving cell is out of coverage.

In a heterogeneous network environment where low power nodes are placed throughout a macro-cell layout, the size of the handover region depends on the cell type of the source the target cell. Further, the size of the handover region between a macro and a pico cell is far smaller than the size of the handover region between a macro to macro handover.

One example of handover region size of different types of handovers is shown below with regard to **Table 1,** where ΔR is the size of the handover region. **Table 1** however shows exemplary values and is not necessarily definitive for each handover type.

**Table 1: An example of HO region sizes of different types of HO**

| source → target | size of HO region (unit: m) |
|---|---|
| Macro→Macro | ΔR = 22.5 |
| Pico→Pico | ΔR = 5.75 |
| Macro→Pico | ΔR = 2.375 |
| Pico→Macro | ΔR = 7 |

Therefore, in order to avoid handover failure, faster handover with a smaller time-to-transition is desirable if the handover involves a small cell.

Further, in heterogeneous networks, in order to offload traffic from the macro cells, pico cells may employ a range extension, where the UE will communicate with the pico cell even though the signal strength from the pico cell is weaker than that of the macro cell. As discussed above, to avoid interference from the macro cell, almost blank subframes are configured at the macro cell so that the UE in pico range expansion area can communicate with the pico cell. The handover region size may also depend on the range extension capabilities of the source and target cell.

Thus, in heterogeneous networks, there may be many low powered nodes co-existing with high powered nodes. To improve the capacity the density of the small cells could be quite high. This may create issues with regard to mobility and interference.

In one proposal by the 3rd Generation Partnership Project workgroup, a macro cell may use a first band for communication and the small cell may use a second band for communication. For example, the macro cell may use 700Mhz while the small cells use 3.5Ghz. However, this is not meant to be limiting and other deployment scenarios could also be employed. The use of two separate frequencies mitigates interference issues between the macro cell and small cells, but not between small cells.

Various embodiments are provided herein to mitigate mobility and interference issues.

In a first embodiment of the present disclosure, enhancements are provided to camping, assisted serving cell addition or removal, and discontinuous reception (DRX).

In a further embodiment, enhancements to Layer 1 channels and uplink timing alignments are provided.

In a further embodiment, assisted serving cell Layer 2 architecture and transport channels are provided.

In a further embodiment, collaborated HARQ solutions are provided.

Each is discussed in detail below.

***ENHANCEMENTS TO CAMPING, ASSISTED SERVING CELL ADDITION/REMOVAL, AND DISCONTINUOUS RECEPTION***

To mitigate mobility and interference issues, in one embodiment of the present disclosure the UE can have multiple serving cells at the same time. Among these serving cells, one macro serving cell may operate in the low frequency band such as 700 Mhz. Further, one or more small serving cells may operate in a higher frequency band such as 3.5Ghz.

The macro serving cell acts as the control serving cell, which at least controls the mobility function for the UE, including handover, idle mode mobility, among others.

The other serving cells act as the assisted serving cells and may provide user plane (U-plane) data communications. In this case, various enhancements to idle mode camping, assisted serving cell addition or removal procedures, and discontinuous reception are possible.

Reference is now made to **Figure 6,** which shows an example system layout having a macro cell **610,** a UE **620** and a small cell **630.** In the embodiment of **Figure 6,** control plane signaling exists between the macro cell **610** and the UE **620.** Control plane (C-plane) signaling may mean the control signaling between the UE and the network, such as radio resource control (RRC) mobility control signaling.

U-plane signaling occurs between the UE **620** and small cell **630.** U-plane signaling may mean user data exchange between the UE and network, such as stream video services, browsing, email exchange, among others.

In other embodiments, C-plane may mean RRC signaling radio bearers between the UE and network while the U-plane may mean the radio data bearers between the UE and the network.

*Restricted Camping In The Idle Mode*

When a UE does not have an active connection to a network, the UE is considered to be in idle mode. In idle mode, the UE will camp on a cell to receive paging and system broadcast information from that cell.

In accordance with one embodiment of the present disclosure, idle mode camping may be restricted. Two scenarios are discussed below.

In a first scenario, the small cell is a non-standalone carrier. This means that the small cell does not transmit certain cell information such as synchronization signals, and is therefore associated with a standalone carrier. In a second scenario, a standalone carrier for a small cell is discussed.

With regard to a non-standalone carrier for the small cell, the small cell may not need to transmit a primary synchronization signal (PSS), a secondary synchronization signal (SSS), a master information block (MIB), or system information block (SIB) information. In this case, the non-standalone small cell may rely on the macro cell to broadcast the system information.

Since the small cell provides no system information, the UE cannot camp on the non-standalone carrier small cell. Instead, the UE always camps on the macro cell. Thus, the UE only measures the reference signal receive power (RSRP)/reference signal received quality (RSRQ) from the macro cell and performs selection or reselection for the macro cells.

However, in some cases, a non-standalone carrier of a small cell may be configured to transmit PSS/SSS/MIB/SIB information as well. In this case, a mechanism is provided herein to restrict the UE from camping on the non-standalone carrier of the small cell.

In one embodiment, a time or frequency location of the PSS/SSS/MIB and/or system information block 1 (SIB1)/system information block 2 (SIB2) for the small cells may be different from the macro cells. In this case, UEs that do not implement the functionality of a standard that supports the proposed embodiment, herein referred to as legacy UEs, may not find the PSS/SSS/MIB and/or the SIB1/SIB2 transmissions from the small cells. UEs that support the proposed embodiments of the present disclosure are aware of the small cells based on the different time or frequency location of the system information, and know not to camp on these cells.

Thus a UE implementing the embodiment would check the time or frequency location of the system information received from a cell and make a determination that the cell is a small cell or a macro cell. The determination may be based on information stored at the UE, such as a predetermined or configured time or frequency location for a macro cell to send system information and if the time or frequency location for the system information differs from the predetermined or configured location then the cell is a small cell, for example.

In an alternative embodiment, the SIB may be used to indicate that the cells are "barred cells" or alternatively small cells that are not used for camping purposes. In this case, no UEs could camp on the cells. Paging functionality may not be provided in the small cells. The system information block may provide an explicit indication that the cell is a barred cell or that camping is not allowed on the cell in some embodiments.

In a further alternative embodiment, the MIB may consist of an additional bit to indicate whether or not the UE is allowed to camp on the cell. A UE supporting the embodiments of the present disclosure may start the initial camping procedure by detecting the PSS/SSS followed by the physical control format indicator channel (PCFICH) and then the MIB. Once the additional bit is detected, the UE may withdraw the camping process and try to camp on another cell.

In yet a further alternative embodiment, the macro cell could indicate that the some of the neighbor cells are small cells, and cannot be used for camping purposes. This could be done through SIB signalling or a particular physical cell identity (PCI) range identification from the macro cells. For example, SIB signalling of macro cells could notify the UEs of the small cell identifiers in the coverage area of the macro cell, and may also indicate whether the small cell could be used for camping purposes. In this case, for example, a one bit flag may be used. If the flag is set, no UEs would camp on the small cell and otherwise the small cell could be used for camping purposes. In other cases, the mere inclusion of the small cell identifier could be an indication to the UE to not camp on the small cell. Other examples are possible.

In a further example, the identifiers of small cells could occupy a certain range of PCIs or a new set of PCIs, as signaled by the macro cell. A UE could be configured to recognize that network cells within a certain PCI range are small cells and should not be camped on.

By restricting UEs from camping on the small cells, the UE could normally be directed to camp on the macro cells. In this case, cell selection or reselection rates can be reduced, since the UE only tries to select or reselect macro cells rather than the numerous small cells detected at the UE.

Further, non-standalone carriers are normally associated with a legacy carrier such as a macro cell, which normally has a better control channel coverage. Thus, the UE may be better to camp on the legacy carrier.

With the above, the macro cell may also temporarily handle U-plane traffic for a UE before an assisted serving cell is added for the UE.

With regard to a standalone carrier for the small cell, such small cells transmit system information such as PSS/SSS/MIB/SIB information and can be used for camping purposes for certain UEs. However, in order to avoid frequent cell selection or reselection, it may be better for the UE to only select or reselect macro cells, since the control channel coverage for the macro cells is normally better, especially when the macro cell uses a lower frequency than the small cells.

In accordance with one embodiment of the present disclosure, a UE may only camp on the macro cell, even though a standalone carrier could be used for the small cell. Thus, referring to **Figure 7,** a macro cell **710** and a small cell **720** exist within the coverage area **712** of macro cell **710.**

Three idle mode UEs **730, 732** and **734** respectively are within the coverage area **712.** Further UEs **732** and **734** are in the coverage area **722** of small cell **720.**

However, since the UEs **730, 732** and **734** are in idle mode, in accordance with the above, all of these UEs camp on macro cell **710** rather than camping on small cell **720.**

In one embodiment, all UEs implementing the embodiments of the present disclosure may restrict camping on small cells. In other embodiments signaling may be used to indicate to a UE that the UE should camp on macro cells only. Again the signaling could include any of the above methods for providing an indication, including using a flag within system information messages or higher level signaling while the UE is previously connected to a macro cell, among other examples. However, these indications are only examples, and any implicit or explicit indication could be used.

If macro cells and small cells are on different frequencies, the restricted camping on a small cell may also be achieved by setting a high reselection priority for the macro cell frequency and a low reselection priority for the small cell frequency.

Reference is now made to **Figure 8,** which shows a simplified process diagram for the embodiments described above. In particular, the process starts at block **810** and proceeds to block **812** in which user equipment receives an indication of whether the network cell it is attempting to camp on is a small cell or macro cell. The indication may be a system information block flag or cell identifier, a system information block from a macro cell restricting camping on certain small cells, a master information block having a flag to indicate whether camping is permitted, a time or frequency location for a synchronization signal, among other indications.

The process then proceeds to block **820** in which a check is made to determine whether the cell the UE is attempting to camp on is a small cell or a large cell. In some cases, the check at block **820** may also determine whether or not camping should be allowed on a small cell. For example, in some cases a macro cell may allow camping on certain small cells but not others.

If the check at block **820** determines that the network cell is a small cell that should not be camped on the process proceeds to block **822** in which camping on the cell is restricted. The process then proceeds to block 830 and ends.

Conversely, if the check at block **820** determines that the network cell can be camped on then the process proceeds to block **824** in which camping is allowed on the network cell. The process then proceeds to block **830** and ends.

*Assisted Serving Cell Addition/Removal Procedures*

In another aspect of the present embodiments, when the UE changes from idle mode to connected mode, for example through downlink paging or uplink data arrival, since the UE always camps on the macro cell, the UE will initiate the random access to the macro cell and establish an RRC connection with the macro cell.

After the RRC connection is established with the macro cell, the macro cell may configure the UE with the inter-frequency measurements on the small cell frequencies to measure the surrounding small cells.

In one embodiment, the macro cell may choose not to make this measurement configuration if the macro cell intends to keep the UE only in the macro cell. For example, the loading of the macro cell may be quite low and macro cell may decide that the UE can be handled at the macro cell. Other reasons for keeping the UE on the macro cell would be apparent having regard to the present disclosure.

When the UE is configured with inter-frequency measurements to measure small cells, including measurement gaps and measurement periods, the UE may then start to measure the RSRP/RSRQ of the surrounding small cells. The measurements may, for example, be in a high frequency band when the small cells are in the high frequency band and the macro is in the lower frequency band.

In one alternative, to further save a battery power on the UE, the network may configure the UE to start the inter-frequency measurements only when it knows the UE has moved closer to the small cells.

In one embodiment, the network may also notify the UEs of the small cell identifiers and other information for the small cells in order to save UE processing effort.

Once the small cells are detected, they may be added as assisted servicing cells. Further, once the signal from the small cell diminished below a certain threshold, the small cell may be removed as an assisted serving cell.

Reference is now made to **Figure 9,** which shows an example flow diagram for assisted serving cell addition.

In **Figure 9,** a UE **910** communicates with a macro serving cell **912.**

Macro serving cell **912** signals to UE **910** that an inter-frequency measurement is required, as shown with inter-frequency measurement configuration message **920.**

After receiving message **920,** UE **910** then performs inter-frequency measurements. This may include for example measuring small cells, and the measurement is shown by block **922** in the embodiment of **Figure 9.** In one embodiment the UE detects a cell **914** that may become an assisted serving cell.

UE **910** then signals a measurement report including, for example, the RSRP/RSRQ measurements back to the macro serving cell **912,** as shown with message **930.** Based on the reported RSRP/RSRQ results, the macro cell could add one or more small cells into the assisted serving cell list. For simplicity, it is assumed with the example of **Figure 9** that only one assisted serving cell **914** is added.

Macro serving cell **912** then sends an assisted serving cell addition preparation message **932** to assisted serving cell **914** and in response receives an assisted cell addition preparation acknowledgement message **934.** In one embodiment, the assisted cell addition preparation acknowledgement message **934** could include radio bearer reconfiguration information. The macro serving cell **912** may also convey the sequence number status of the packet transmission to the assisted serving cell **914** and perform data forwarding to the assisted serving cell **914.**

The macro serving cell **912** may then signal UE **910** to add the assisted serving cell into its active cell list. This could be done with an assisted serving cell activation RRC signaling message **940** sent to UE **910.**

Message **920** may include the dedicated preamble and the cell-radio network temporary identifier (C-RNTI) for the target small cell **914** in some cases. After receiving the message, the UE **910** may perform a non-contention based random access to get uplink timing alignment with the assisted target cell to establish a communication link. Non-contentious radio access is shown by block **950** in the embodiment of **Figure 9.**

In one embodiment, in order to enhance the connection set up procedure, during random access procedure with the assisted serving cell, the assisted serving cell **914** may direct data radio bearers, but not signaling radio bearers, to UE **910,** as shown by message **960.**

In an alternative embodiment, as shown by message **962,** the radio bearer reconfiguration may be sent by macro serving cell **912** to UE **910** instead. Such information may, for example, be received at macro serving cell **912** from assisted serving cell **914** using message **934** over a backhaul such as an X2 interface. In one embodiment, the radio bearer reconfiguration may be sent by macro serving cell **912** to UE **910** using message **940.**

Once the radio bearer reconfiguration is received at UE **910,** the UE may then send a radio bearer reconfiguration complete message **964** to the assisted serving cell **914** and may further indicate that activation is complete to macro serving cell **912,** as shown by message **966.**

Once the macro serving cell **912** receives an activation complete message **966,** it may switch the user plane radio bearers from macro serving cell **912** to the assisted serving cell **914** through a message to a serving gateway (S-GW)/packet data node gateway (PDN-GW) **916,** as shown by message **970.**

After this, the user plane data is exchanged between assisted serving cell **914** and the UE **910,** as shown by block **972.** The control plane data is exchanged between macro serving cell **912** and UE **910,** as shown by block **974.**

In one alternative embodiment, in the assisted serving cell activation RRC signaling, radio bearer configurations of small cells may be directly included so that the random access procedure with the small cell is mainly for uplink timing alignment purposes. Thus, after the radio bearers are set up with the small cells, data communication could start.

In some cases, the assisted serving cell may need to be switched and reference is now made to **Figure 10** which shows an assisted serving cell removal procedure.

As seen in **Figure 10,** a UE **1010** communicates with a macro serving cell **1012.** Further, a current assisted cell **1014** provides user plane data to the UE **1010.**

UE **1010** makes inter-frequency measurements for small cells, as shown by block **1020.** This may be based on receiving an inter-frequency measurement configuration message **1022,** but may also be based on the UE making periodic inter-frequency measurements.

UE **1010** then sends a measurement report with the RSRP/RSRQ, for example, to macro serving cell **1012,** as shown by message 1030. The message **1030** may indicate that the UE is moving out of coverage assisted serving cell **1014.** Message **1030** may also include RSRP/RSRQ values of different small cells.

The macro eNB **1012** may then send an assisted serving cell modification RRC signaling message to the UE, as shown by message **1040.** Message **1040** may remove the current assisted serving cell and add a new assisted serving cell. Further, macro serving cell **1012** may send an assisted serving cell addition preparation message to a target assisted cell **1016,** as shown by message **1032** and the macro serving cell **1012** may receive an acknowledgement or confirmation message **1034** back. The current assisted cell **1014** may send the sequence number status of the packet transmission to the macro serving cell **1012** first and the macro serving cell **1012** further sends the sequence number status to the target assisted cell **1016.** For data forwarding, the current assisted cell **1014** may first forward the data to the macro serving cell **1012** and then the macro serving cell **1012** further forwards the data to the target assisted cell **1016.** Alternatively, the sequence number status transfer and data forwarding could be performed directly between the current assisted cell **1014** and the target assisted cell **1016.**

UE **1010** may then attempt a random access procedure with the new target assisted serving cell **1016,** shown by block **1050.**

Further data radio bearers could then be set up with the new assisted target serving cell **1016.** This may be based on a radio bearer reconfiguration message **1052** received from target assisted cell **1016** or a similar message **1054** received from macro serving cell **1012.** The radio bearer reconfiguration of message **1054** may be received at macro serving cell **1012** over a backhaul interface such as an X2 interface and may, for example, be provided within message **1034.**

Once the radio bearer reconfiguration is complete, a message 1060 may be sent from UE **1010** to target assisted cell **1016.**

UE **1010** will then provide an activation complete message **1062** to macro serving cell **1012.**

Macro serving cell **1012** will then send an assisted serving cell deactivation message indicating that the UE should remove the current assisted cell **1014.** The message is shown with arrow **1064** in the embodiment of **Figure 10.**

In response to the receipt of message **1064,** the UE **1010** will send message **1066** back to macro serving cell **1012** confirming the deactivation.

Further, the macro cell **1012** will send an assisted serving cell deactivation to current assisted cell **1014,** as shown by message **1070** and a confirmation may be sent back as shown by arrow **1072.**

Upon the deactivation of the current assisted cell **1014** and the activation of target assisted cell **1016,** user plane data may be exchanged between UE **1010** and target assisted cell **1016,** as shown by block **1080.** Further, control plane data exchange may occur between the UE **1010** and macro serving cell **1012** as shown by block **1082.**

In an alternative embodiment, the random access procedure to the new assisted serving cell may be skipped if the coverage sizes of the current and the new assisted serving cells are similar and the coverage sizes of the assisted serving cells are small. In this case, the uplink timing is similar for both small cells since there is similar path loss.

In some embodiments, the macro cell may know both small cells have similar uplink timing and in this case the random access may not be needed. This could reduce the switch delay on the user plane in some embodiments.

In the embodiment of **Figure 10,** the assisted serving cell activation or deactivation is due to UE mobility. In this case, the target assisted serving cell could be added either before or after the current assisted serving cell is removed. Further, in the embodiment of **Figure 10,** the target assisted cell is shown to be added first and the current assisted cell is then deactivated. However, in other embodiments these could be reversed.

In some cases, there may not be any other suitable small cells available for transfer and in this case, the macro serving cell may keep the UE for both the user plane and the control plane communications. In this case, the macro serving cell may signal to the serving gateway to switch the user plane to the macro serving cell until a subsequent time where it may choose to add a new assisted serving cell or re-add a previous assisted serving cell.

*Enhanced DRX Procedures*

In a further embodiment of the present disclosure, the macro cell may configure a small cell specific DRX to limit the small cell PDCCH monitoring activities. In accordance with one embodiment, the UE may have two different DRX configurations that are active simultaneously. One of the DRX configurations is the macro-cell DRX configuration which controls macro-cell PDCCH monitoring activity. The other DRX configuration is the small-cell DRX configuration which controls the small-cell PDCCH monitoring activity.

In one example, the two DRX configurations could complement each other in order to make UEs only monitor one cell at any given subframe.

In another example, the two configurations could overlap so at certain subframes the UE may need to monitor both PDCCHs. Both configurations could be achieved by suitable configurations of the DRX parameters such as the on-duration timer, inactivity timer, DRX cycle length, among others.

The two DRX operations may cooperate to further save battery resources on the UE. For example, after a period of inactivity the UE may only monitor the macro cell and, if necessary, the macro cell may send initial PDCCH data for the small cell transmission and subsequently the UE may then monitor the small cell.

When active on the small cell, the UE could return the function for the macro cell sending the PDCCH for the UE to get control data.

Reference is now made to **Figure 11,** which shows an example of multiple non-overlapping DRX configurations.

As seen in **Figure 11,** a first DRX configuration for macro serving cell **1110** compliments a second DRX configuration for assisted serving cell **1112.** In particular, the on duration for the DRX for macro cell is shown with arrow **1120** and the on duration for the small cell is shown with arrow **1130.** In this case, the on duration for the macro cell **1120** does not overlap with the on duration for the small cells **1130.**

For cell measurements, the UE may continue to measure the RSRP/RSRQ of cells on both frequency bands. In other words, UE may continue to monitor the macro cell band and the small cell band. No measurement gaps and measurement periods are needed to perform such measurements, since both bands are "intra-frequencies" to the UE.

In one alternative, the control serving cell may reconfigure the measurement entities and events when a small cell becomes an assisted serving cell for the UE. Thus, in one example, the macro cell will remove the inter-frequency measurement entities and events, but add or modify the intra-frequency measurement entities and events for the UE, even though the small cell is on a different frequency band.

### *ENHANCEMENTS TO LAYER 1 CHANNELS AND UPLINK TIMING ALIGNMENTS*

In a further, alternative embodiment, operation for both UEs and the network may be simplified through the use of independent layer 1 control channels or data channels for each serving cell.

#### *Macro Cell*

With regard to macro cell layer 1 channels, on the downlink of the macro cell, the UE needs to monitor the PDCCH if DRX is not configured. However, since the macro serving cell may only provide control plane data communication such as mobility control information, there may be infrequent data exchange between the macro cell and the UE. In this case, a macro cell specific DRX could be applied to reduce the UE battery consumption by avoiding double decoding of the PDCCH from both the macro cell and the small cell. Therefore, in this case the UE only monitors the macro cell PDCCH during the active time. Further, the macro cell specific DRX long cycles could be relatively large.

After decoding the PDCCH, the UE could receive the corresponding physical downlink shared channel (PDSCH) from the macro cell. The UE may also receive the PCFICH and the physical HARQ indicator channel (PHICH) from the macro cell.

On the uplink of the macro cell, the UE needs to report the channel quality indicator (CQI)/precoding matrix indicator (PMI)/ rank indicator (RI)/precoding type indicator (PTI) to the macro cell. The reporting may be done periodically or aperiodically. However, due to infrequent transmissions, aperiodical CQI/PMI/RI/PTI transmissions may be more suitable in some embodiments.

To further improve spectrum efficiency, in a further embodiment higher layer signaling, including RRC signaling, may be used to deliver the CQI/PMI/RI/PTI rather than the layer 1 control signalling.

In a further embodiment, if the UE is closer to the small cell, which has the smaller pathloss, in some instances the UE may transmit the physical uplink shared channel (PUSCH) for the macro serving cell through the assisted serving cell. That is, for the data that the UE intends to transmit to the macro serving cell, the UE may transmit to the assisted serving cell and the assisted serving cell may relay the data to the macro serving cell. In this case, data tunneling may be needed using a backhaul interface such as an X2 interface for the transmission of such data from the assisted serving cell to the macro serving cell.

Reference is now made to **Figure 12,** which shows the reporting of data to the macro cell utilizing the small cell. In particular, in **Figure 12,** a UE **1210** communicates with a small cell **1220.** Further, the UE **1210** needs to provide information or data to macro cell **1230.** In this case, UE **1210** sends the information or data to small cell **1220** which, through a backhaul interface shown by link **1232** then sends the data to macro cell **1230.** Thus, in **Figure 12,** for the data that the UE needs to transmit to the macro cell, including measurement reports, the UE may first transmit to the small cell and the small cell may then transmit to the macro cell.

In a further embodiment, the relayed data may include layer 1 control signalling that the UE intends to transmit to the macro cell when a fast backhaul between the macro cell and the small cell is available.

With regard to the embodiments above, since the small cell communicates on a different frequency than the macro cell, no information will be received by the macro cell directly, but only through the backhaul X2 interface.

#### *Assisted Serving Cell*

With regard to the assisted serving cell, enhancements may also be made to the assisted serving cell layer 1 channels. On the downlink of the assisted serving cell, the UE may monitor the PDCCH of the assisted serving cell for downlink or uplink grants and other control information. The present embodiments provide for several enhancements over current PDCCH data received from the assisted serving cell.

In one embodiment, the PDCCH from the assisted serving cell may be carried in the PDSCH region of the small cell. In this case, the macro-serving cell may signal the resources to be used for the PDSCH region to deliver the downlink control information (DCI) which may include the number of resource blocks, the location of the resource blocks, the number of orthogonal frequency division multiplexing (OFDM) symbols, the start of the OFDM symbol index, the reference symbol (RS) configurations for the control region among others.

In a further embodiment, the DCI information of the assisted serving cell may be carried by the PDCCH from the macro serving cell. In this case, the assisted serving cell may determine the resource grant and modulation coding scheme (MCS) information. This information may be delivered to the macro serving cell through the X2 interface for the downlink transmission. In this case, the UE does not need to monitor two PDCCHs and only needs to monitor the PDCCH from the macro-serving cell. However, sufficient PDCCH regions need to be configured on the macro-serving cell to prevent control channel bottlenecks.

Further, the assisted serving cell may not need to provide the PDCCH which can simplify the operation of the assisted serving cell, which then only provides the PDSCH. However, in this case, the backhaul delay between the two serving cells may need to be small in order for the information to be exchanged efficiently.

However, even with low latency backhaul, the PDCCH grants for PDSCH transmissions are typically in the same subframe. Therefore, in one embodiment, when the PDCCH grant is received in subframe N from the macro serving cell, the actual PDSCH grant may be for another subframe, referred to as N+K. For example, K might equal 4 where the grant is four subframes in the future on the assisted serving cell.

Reference is now made to **Figure 13,** which shows a downlink channel from a macro serving cell **1310** and the downlink channel from an assisted serving cell **1320.** In a subframe n on the macro serving cell **1310,** shown with reference numeral **1330,** a PDCCH for the assisted serving cell is provided. In this case, the relevant PDSCH is shown with reference numeral **1332** and is for four subframes in the future from the PDCCH subframe.

In one embodiment, a flag may be used in the PDCCH from the macro cell to indicate that the grant is for the assisted serving cell. In some embodiments the grant may also need to include identification of the assisted serving cell, for example when there are multiple configured assisted serving cells.

In a further embodiment, the assisted serving cell may not need to transmit the PCFICH, but a PHICH may still be needed.

In a further embodiment the PHICH may also not be needed and in this case adaptive retransmissions in the uplink of the assisted serving cells will always apply. In other words, non-adaptive uplink retransmissions would not exist in this case. Hence, all layer 1 downlink control channels could be removed from the assisted serving cell.

Referring again to **Figure 13,** if the downlink control channels are removed, then the control regions **1340** may also be removed from the assisted serving cell **1320.** The control regions **1340** could then be replaced by the PDSCH, allowing more data throughput.

On the uplink of the assisted serving cell, layer 1 control channels may still be needed including ACK/NACK transmissions. Other transmissions that may be needed on the uplink include the CQI/PMI/RI/PTI transmissions and scheduling request (SR) transmissions. The use of the uplink control channels on layer 1 may allow for more efficient use of battery resources on the UE since there is a smaller path loss to the UE from the small cell than from the large cell in some cases.

*Uplink Timing Alignment*

For uplink timing alignment, the UE may need to maintain two different uplink transmission timings. One timing alignment may be needed for the macro serving cell and the other timing alignment needed for the assisted serving cell. Two different timing alignment timers (TAT) may be needed and maintained separately. The macro serving cell will periodically send a timing advance (TA) command to the UE to maintain the uplink timing alignment and the same may be sent for the assisted serving cell.

If uplink timing is lost on any one of the links, the UE may need to start the random access procedure to re-synchronize the uplink.

In one embodiment of the present disclosure, only PDCCH order based random access may be supported on the assisted serving cell. Thus, if the uplink timing is lost in the assisted serving cell, and there is downlink data arrival, the assisted serving cell could send the PDCCH order to the UE to trigger uplink synchronization for data exchange.

If there is uplink data arrival at the UE, the UE could first indicate to the macro serving cell through a SR transmission and/or a buffer status report (BSR) transmission, and then the macro serving cell could notify the assisted serving cell to trigger the PDCCH order for the uplink synchronization with the assisted serving cell. Data exchange would still occur with the assisted serving cell.

Reference is now made to **Figure 14,** which shows an example for re-establishing uplink timing with an assisted serving cell. As seen in **Figure 14,** a UE **1410** communicates both with the macro serving cell **1412** and an assisted serving cell **1414.**

On the UE **1410,** uplink data arrives, as shown by block **1420.** In this case, the UE **1410** provides a message **1422** to macro serving cell **1412.** Message **1422** indicates to macro serving cell **1412,** through either the SR, BSR or random access (RA), that uplink user plane data has arrived. Macro serving cell **1412** then sends an uplink user plane data arrival message **1424** to the assisted serving cell **1414.** In one embodiment, the indication at block **1422** may indicate which assisted serving cell the uplink data is for, and provide an identifier for the serving cell if there are multiple assisted serving cells.

Once the assisted serving cell **1414** has received the uplink user plane data at message **1424,** the assisted serving cell **1414** then sends a PDCCH order to realign uplink timing. The message is sent to UE **1410** and is shown by arrow **1430.**

Based on the receipt of message **1430,** the UE **1410** may then perform non-contentious random access to the assisted serving cell in order to re-align timing, as shown by block **1440.**

Once the timing is re-aligned, the assisted serving cell **1414** may send a PDCCH uplink grant message **1442** and the UE may then provide the uplink data transmission as shown by message **1444.**

In an alternative embodiment, a UE initiated random access may also be supported in the assisted small cell. In this case, if there is an uplink data arrival, the UE could indicate to the assisted serving cell through UE initiated contention based random access procedures and uplink timing could also be achieved. The assisted serving cell could then transmit the uplink grant and the UE could perform uplink data transmission accordingly.

Reference is now made to **Figure 15.** In the embodiment of **Figure 15** a UE **1510** communicates with both a macro serving cell **1512** and an assisted serving cell **1514.**

At UE **1510,** uplink user plane data arrives, as shown by block **1520,** and the UE then initiates a contention based random access to the assisted serving cell **1514,** as shown by block **1522.**

Based on the contention based RA, the assisted serving cell **1514** then sends a PDCCH uplink grant message **1530** and the UE may then send uplink data transmission messages, as shown by arrow **1532.**

***ASSISTED SERVING CELL LAYER 2 ARCHITECTURE AND TRANSPORT CHANNELS***

In one embodiment, when small cells have an S1 interface, the small cell is visible to the network and has its own cell identifier. The small cell will transmit the PSS/SSS/MIB/SIB and can operate like a regular cell. In this case, the UE may receive RRC messages from both the assisted serving cell and the macro serving cell.

In accordance with one embodiment, in order to reduce UE complexity, the UE may have only one RRC connection with the macro serving cell. RRC related information of the assisted serving cell will be first delivered to the macro serving cell and then the macro serving cell may transmit to the UE through the signaling radio bearer.

If the small cell does not have an S1 interface, the small cell may not have its own cell identifier and may not transmit the PSS/SSS. There are therefore no RRC functions in the small cell and the small cell operates like a user plane relay point for the macro cell. In this case, a layer 2 only assisted serving cell architecture is provided below. A new entity, referred to herein as a local RRC (LRRC) is provided to facilitate layer 2 only assisted serving cell operations.

In particular, when the small is visible to the UE and has its own cell identifier, in the RRC layer the macro serving cell controls the mobility related functions such as handover functions, measurement functions, assisted serving cell activation/deactivation functions, macro-serving cell DRX functions, radio bearer configurations for the macro serving cell, among others. The small cell controls local radio resource management functions such as data radio bearer configurations, assisted serving cell DRX configurations, among others. The RRC of the small cells will not have the mobility control functions, measurements related functions and paging functions in this case.

*Assisted Serving Cell With S1 Interface*

Reference is now made to **Figure 16.** As seen in **Figure 16,** the assisted serving cell has a full user plane protocol stack. In particular, a UE **1610** has various protocol stack layers including a physical layer **1612,** a medium access control (MAC) layer **1614,** a radio link control (RLC) layer **1616** and a packet data convergence protocol (PDCP) layer **1618.**

Similarly, assisted serving cell **1620** includes a protocol stack with a physical layer **1622,** a MAC layer **1624,** an RLC layer **1626** and a PDCP layer **1528.**

As seen in the embodiment of **Figure 16,** logically the communications occur between the same protocol layers between UE **1610** and assisted serving cell **1620.**

Reference is now made to **Figure 17.** When the assisted serving cell has an S1 interface with a mobility management entity (MME), the control plane for the assisted serving cell may be as shown with regard to **Figure 17.** In particular, UE **1710** includes a physical layer **1712,** a MAC layer **1714,** an RLC layer **1716,** a PDCP layer **1718,** and an RRC layer **1720.**

Macro serving cell **1730** includes a physical layer **1732,** a MAC layer **1734,** an RLC layer **1736,** a PDCP layer **1738** and a RRC layer **1740.** RRC layer **1740** is used, in the example of **Figure 17,** for mobility management, handover functions, assisted serving cell activation/deactivation functions, macro serving cell DRX functions, radio bearer configurations for the macro serving cell, among other functionality.

Similarly, assisted serving cell **1750** includes a physical layer **1752,** a MAC layer **1754,** an RLC layer **1756,** a PDCP layer **1758** and an RRC layer **1760.** RRC layer **1760** may be used for data radio bearer configuration, assisted serving cell DRX configurations, among other functionality.

Thus, as seen in **Figure 17,** in the control plane a UE is receiving RRC messages from both the assisted serving cell **1750** and the macro serving cell **1730.** Such RRC communications can cause UE complexity.

In order to reduce UE complexity, in one embodiment of the present disclosure, the UE has only one RRC connection with the macro serving cell. RRC related information of the assisted serving cell is first delivered to the macro serving cell through the S1 interface and then the macro serving cell may transmit the RRC information to the UE through the signaling radio bearer. In one embodiment, certain RRC "containers" may be designed to deliver the RRC related information of the assisted serving cell.

Reference is now made to **Figure 18,** which shows an alternative control plane to that of **Figure 17.** The embodiment of **Figure 18** includes a UE **1810** having a physical layer **1812,** a MAC layer **1814,** an RLC layer **1816,** a PDCP **1818** and an RRC layer **1820.**

A macro serving cell **1830** includes a physical layer **1832,** a MAC layer **1834,** an RLC layer **1836,** a PDCP layer **1838,** and an RRC layer **1840.** The RRC layer **1840** is used for the same purposes as RRC layer **1740** of the embodiment of **Figure 17.**

Similarly, assisted serving cell **1850** includes a physical layer **1852,** a MAC layer **1854,** an RLC layer **1856,** a PDCP layer **1858,** and an RRC layer **1860.** The RRC layer **1860** has the same functionality as the RRC layer **1760** in the embodiment of **Figure 17.**

However, contrary to the embodiment of **Figure 17,** the embodiment of **Figure 18** has the RRC layer **1860** of the assisted serving cell **1850** communicating with RRC layer **1840** of macro serving cell **1830.** Such communication may be, for example, through a backhaul between the macro serving cell **1830** and assisted serving cell **1850.**

The RRC layer **1840** then communicates with the RRC layer 1820 of UE **1810.**

*Assisted Serving Cell Without S1 Interface*

In a further embodiment, the assisted serving cell may not have an S1 interface with an MME. If there is no S1 interface, there are no RRC functions on the small cell and the small cell operates like a U-plane relay point for the macro cell.

Reference is now made to **Figure 19,** which shows the user plane for an assisted serving cell without an S1 interface. As seen in **Figure 19,** assisted serving cell **1910** includes a physical layer **1912,** MAC layer **1914,** RLC layer **1916** and PDCP layer **1918.**

Similarly, UE **1920** includes a physical layer **1922,** a MAC layer **1924,** an RLC layer **1926** and a PDCP layer **1928.**

Macro serving cell **1930** includes a physical layer **1932,** a MAC layer **1934,** an RLC layer **1936** and a PDCP layer **1938.**

In the embodiment of **Figure 19,** the assisted serving cell **1910** provides a relay between the macro serving cell **1930** and the UE **1920.** Thus, in the embodiment of **Figure 19,** the macro serving cell delivers the PDCP service data unit (SDU) for all users that utilize the assisted serving cell **1910.** In the assisted serving cell, a full user plane stack is available for data transmission. Each user has its own PCDP SDU queues for both uplink and downlink.

Referring to **Figure 20,** the figure shows the control plane when the assisted serving cell has no S1 interface. A UE **2010** communicates with the macro serving cell **2030.** UE **2010** includes a physical layer **2012,** a MAC layer **2014,** an RLC layer **2016,** a PDCP layer **2018** and an RRC layer **2020.** Similarly, macro serving cell **2030** includes a physical layer **2032,** a MAC layer **2034,** an RLC layer **2036,** PDCP layer **2038** and an RRC layer **2040.**

Since the assisted serving cell has no S1 connection, the macro serving cell **2030** handles all RRC related functions, including mobility, radio bearer configuration, DRX configuration, measurement configuration, paging functionalities, among others. The assisted serving cell does not have an RRC connection to the UE **2010.**

In a further embodiment, a layer 2 only assisted serving cell is provided. In this case, the MAC layer function may be implemented in the small cell. The scheduling function and HARQ function are also in the small cell, as is the random access function. Further, the full RLC function is provided in the assisted serving cell. However, in this embodiment, the PDCP function is not found within the small cell. In this case, macro-serving cell delivers the PDCP protocol data unit (PDU) to the assisted serving cell and all ciphering and integrity protection are done in the macro serving cell. The macro-serving cell configures all RRC related configurations in the assisted serving cell through an X2 interface. Reference is now made to **Figure 21.**

**Figure 21** shows a user plane protocol stack between the UE, assisted serving cell and macro serving cell. In the embodiment of **Figure 21,** assisted serving cell **2110** includes a physical layer **2112,** a MAC layer **2114** and an RLC layer **2116.** A UE **2120** includes a physical layer **2122,** a MAC layer **2124,** an RLC layer **2126** and a PDCP layer **2128.**

Similarly, macro serving cell **2130** includes a physical layer **2132,** a MAC Layer **2134,** a RLC layer **2136** and a PDCP layer **2138.**

Thus, in accordance with the embodiment of **Figure 21,** the PDCP layer **2138** of the macro serving cell **2130** communicates directly with PDCP layer **2128** of the UE **2120** and the assisted serving cell **2110** does not include a PDCP layer.

For the control plane, the control plane is identical in the embodiment as that of **Figure 20** above.

With the above embodiment, some limited RRC functionality may still be needed at the small cell for radio management purposes. Thus, in a further embodiment, a local radio resource control (LRRC) may be implemented in the small cell.

Reference is now made to **Figure 22**, where a macro serving cell **2210** has an RRC layer **2212.** In this case, a macro serving cell **2210** may configure the LRRC layer **2222** of assisted serving cell **2220** over an X2 interface. In some cases a low latency backhaul link may be used for such configuration, especially with some situations with fast radio configurations.

An LRRC layer **2222** may have a number of functionalities. These may include, but are not limited to, the following:

- Random Access function for assisted serving cell
- Radio bearer configurations (e.g., data radio bearers) for assisted serving cell according to the instructions from the macro-serving cells.
- Report the resource/traffic status to the eNB such as the number of RB used
- Uplink timing alignment for the camped UEs
    - Generating the uplink timing offset values from the layer 1 provided estimation
    - Configuring the MAC to transmit the TA Command
- Maintain the list of the UE IDs that utilizes the assisted serving cell.

Thus in accordance with the above, the assisted cell has a radio resource control that provides certain functionality to UEs on an assisted serving cell without an S1 interface.

***COLLABORATED HARQ***

For hybrid automatic repeat request, one straightforward solution would be to have two completely independent HARQ procedures, one for the link between the macro cell and the UE and the second for the link between the small cell and the UE. In this way, each link is operated separately and the HARQ procedures are relatively straightforward. However, the maintaining of two completely independent HARQ procedures may increase control overhead and reduce the battery life of a UE.

To overcome the above, HARQ may be implemented in a hybrid fashion. Specifically, on the link between the macro cell and the UE, the data transmission is infrequent and is mostly composed of control plane data. Thus, in accordance with one embodiment of the present disclosure, synchronous HARQ is applied in the downlink, meaning the HARQ process identifier is implicitly mapped to the subframe number for the specific UE. Those skilled in the art will appreciate that the synchronous behavior is only applied to some UEs, and other UEs may still use asynchronous HARQ procedures, meaning that the HARQ process IDs are not mapped with the subframe number implicitly.

In order to simplify changes within the LTE specifications, the DCI format may not be changed, even though for synchronous HARQ, the HARQ process ID is not needed to be transmitted. Alternatively, the HARQ process ID in the DCI formats for a UE that is configured with synchronous downlink HARQ processes may be removed.

For a UE that is configured with DL synchronous HARQ process, only one or two HARQ processes are reserved for the communication. Reference is now made to **Figure 23** in which one HARQ process is used in the example. Specifically, as seen in Figure 23, for the downlink there is only one reserved HARQ slot every 8 subframes, as shown by reference numeral **2310.** This is however meant to be an example and other configurations for reserved downlink subframes are possible.

There is also an associated uplink HARQ process where a reserve slot is associated with the downlink DL HARQ slot **2310.** The uplink slot is shown by reference numeral **2320.** In the example of **Figure 23,** the associated uplink HARQ process is 4ms apart from the downlink process in a frequency division duplex (FDD) system.

Thus, in accordance with the example of **Figure 23,** the UE may only receive subframes n, n+8, n+16, n+24, etc. The UE may be active in the associated uplink HARQ process, at subframes n+4, n+12, n+20, etc.

The downlink transmission only occurs in the allocated HARQ process. In other words, the eNB only transmits data to the UE every 8 subframes. The UE will be in sleep mode during other HARQ processes. For example, the UE wakes up at subframe "n" and blindly decodes its PDCCH from the macro cell. If there is data for the UE, the UE will receive the data in the PDSCH and then 4ms later in the UL subframe n+4 the UE will feedback its ACK/NACK to the macro cell.

The macro cell may schedule the UE in subframe n+8 for the retransmission if a NACK is received.

Conversely, if an ACK is received, the macro cell could schedule new data to the UE.

In current embodiments of LTE, in a given subframe the UE may only receive one UE-specific PDSCH transmission. However, due to the limited time slots in which the UE could receive PDSCH transmissions in accordance with the above, in one embodment the UE may further receive more than one UE-specific PDSCH transmission in one subframe.

Thus, for example, in subframe n+8, the UE may receive both the grant for the retransmission and the grant for the new data transmission. This could potentially reduce the data transmission delay. In another example, the UE may receive multiple grants for the new data transmission.

Due to the multiple PDSCH transmissions to a UE in a subframe, additional uplink ACK/NACK resources may be needed. If there are two PDSCH transmissions with each having one codeword, then a PUCCH format 1b may be used with each ACK/NACK bit corresponding to one PDSCH transmission. If more than two ACK/NACK bits are needed then PUCCH format 1b with channel selection or PUCCH format 3 could be used.

The uplink transmission only occurs in the associated uplink HARQ process. In other words, the UE only transmits the data to the macro cell every 8 subframes but with a 4 subframe offset from the downlink HARQ process in FDD mode. Note in TDD mode, the offset should be K and K may dynamically change according to different TDD configurations. For example, if the UE has data to send in the uplink and indicates to the macro cell by either the random access, the SR channel or BSR, the macro cell transmits the UL grant in the PDCCH region of subframe n. The UE then transmits its data in the uplink subframe n+4. In the downlink subframe n+8, in the case of non-adaptive transmission, the UE will wake up to receive the ACK/NACK from the macro cell to determine whether the data is received or not and perform the corresponding non-adaptive retransmissions on the uplink subframe n+12. In the case of adaptive retransmissions, the UE receives a retransmission grant and performs the retransmission in the uplink subframe n+12.

In a further embodiment, the PCFICH and/or the PHICH may not be needed for the macro cell. Specifically, if most of the traffic from the macro cell is control plane data and therefore does not have not have bursty characteristics, dynamic adaptation of the PDCCH region at a subframe level may not be necessary. The present disclosure provides that the PDCCH of the macro cell may be pre-configured or semi-statically configured through SIB signalling or RRC dedicated signalling.

The macro cell may signal a UE, indicating whether the downlink synchronous HARQ is configured. If configured, the macro cell needs to further signal to the UE about the number of HARQ processes to be used for the downlink and the details of the HARQ processes such as the HARQ process IDs.

In one alternative, the associated uplink HARQ process could also be implicitly derived from the downlink HARQ process.

In the time division duplex (TDD) case, a mapping table of the downlink/uplink HARQ process may be predetermined in the standards or the macro cell may signal to the UE that the downlink subframes that the UE needs to monitor.

If transmissions of the macro cell system information are not in the downlink subframes that the UE needs to monitor, dedicated RRC signalling can be used to deliver the system information to the UE.

On the link between the small cell and the UE, user-plane data is exchanged. Due to the large amount of data and bursty characteristics of this data, asynchronous HARQ may be a suitable choice while the uplink could provide for a synchronous HARQ. In an alternative embodiment, similar synchronous HARQ may be applied to the downlink as well and the macro cell may signal to the UE the number of HARQ processes used for the link between the small cell and the UE. Reference is now made to **Figure 24.**

As seen in **Figure 24,** the UE will receive or transmit data to the macro cell on one allocated HARQ process, as shown by reference numeral 2410 in the downlink and by reference numeral **2412** in the uplink.

For the small cell, the UE will receive or transmit data to the small cell in 5 allocated HARQ processes in the example of Figure 24. The exchange of data with the small cell is shown with reference numeral **2420** in the downlink and reference numeral **2422** in the uplink.

Idle frames are shown with reference numeral **2430.**

The above example of **Figure 24** assumes that the macro cell and small cell operate in a synchronous manner. In the example of **Figure 24,** in a given subframe the UE will receive or transmit data from or to only one cell. In other words, in a given subframe the UE will receive on one frequency. This may simplify the UE implementation as well as saving UE battery power.

For unallocated HARQ processes, the UE could go to an idle radio state, thereby saving the battery resources.

When the UE needs to receive system information, the UE may receive the system information regardless of the HARQ process allocation. In another alternative, the macro cell may include the system information transmission during the allocated HARQ process, for example, via dedicated control signaling.

The macro cell signals the HARQ process allocation to the UE for both the macro cell and the small cell. The allocation could be semi-statically updated from time to time based on traffic conditions. In one extreme case, the macro cell may allocate no HARQ processes between the small cell and the UE, which means that there is no user plane data communication on the link. The HARQ process allocation could overlap or be non-overlapped in some embodiments.

The macro cells and small cells or assisted serving cells may be implemented using any network element. A simplified network element is shown with regard to **Figure 25.**

In **Figure 25,** network element **2510** includes a processor **2520** and a communications subsystem **2530,** where the processor **2520** and communications subsystem **2530** cooperate to perform the methods described above.

Further, the above may be implemented by any UE. One exemplary device is described below with regard to **Figure 26**.

UE **2600** is typically a two-way wireless communication device having voice and data communication capabilities. UE **2600** generally has the capability to communicate with other computer systems. Depending on the exact functionality provided, the UE may be referred to as a data messaging device, a two-way pager, a wireless e-mail device, a cellular telephone with data messaging capabilities, a wireless Internet appliance, a wireless device, a mobile device, or a data communication device, as examples.

Where UE **2600** is enabled for two-way communication, it may incorporate a communication subsystem **2611,** including both a receiver **2612** and a transmitter **2614,** as well as associated components such as one or more antenna elements **2616** and **2618,** local oscillators (LOs) **2613,** and a processing module such as a digital signal processor (DSP) **2620.** As will be apparent to those skilled in the field of communications, the particular design of the communication subsystem **2611** will be dependent upon the communication network in which the device is intended to operate. The radio frequency front end of communication subsystem **2611** can be any of the embodiments described above.

Network access requirements will also vary depending upon the type of network **2619.** In some networks network access is associated with a subscriber or user of UE **2600.** A UE may require a removable user identity module (RUIM) or a subscriber identity module (SIM) card in order to operate on a network. The SIM/RUIM interface **2644** is normally similar to a card-slot into which a SIM/RUIM card can be inserted and ejected. The SIM/RUIM card can have memory and hold many key configurations **2651,** and other information **2653** such as identification, and subscriber related information.

When required network registration or activation procedures have been completed, UE **2600** may send and receive communication signals over the network **2619.** As illustrated in **Figure 26**, network **2619** can consist of multiple base stations communicating with the UE. These can include base stations for macro cells and assisted serving cells or small cells in accordance with the embodiments described above.

Signals received by antenna **2616** through communication network **2619** are input to receiver **2612,** which may perform such common receiver functions as signal amplification, frequency down conversion, filtering, channel selection and the like. A/D conversion of a received signal allows more complex communication functions such as demodulation and decoding to be performed in the DSP **2620.** In a similar manner, signals to be transmitted are processed, including modulation and encoding for example, by DSP **2620** and input to transmitter **2614** for digital to analog conversion, frequency up conversion, filtering, amplification and transmission over the communication network **2619** via antenna **2618.** DSP **2620** not only processes communication signals, but also provides for receiver and transmitter control. For example, the gains applied to communication signals in receiver **2612** and transmitter **2614** may be adaptively controlled through automatic gain control algorithms implemented in DSP **2620.**

UE **2600** generally includes a processor **2638** which controls the overall operation of the device. Communication functions, including data and voice communications, are performed through communication subsystem **2611.** Processor **2638** also interacts with further device subsystems such as the display **2622,** flash memory **2624,** random access memory (RAM) **2626,** auxiliary input/output (I/O) subsystems **2628,** serial port **2630,** one or more keyboards or keypads **2632,** speaker **2634,** microphone **2636,** other communication subsystem **2640** such as a short-range communications subsystem and any other device subsystems generally designated as **2642.** Serial port **2630** could include a USB port or other port known to those in the art.

Some of the subsystems shown in **Figure 26** perform communication-related functions, whereas other subsystems may provide "resident" or on-device functions. Notably, some subsystems, such as keyboard **2632** and display **2622,** for example, may be used for both communication-related functions, such as entering a text message for transmission over a communication network, and device-resident functions such as a calculator or task list.

Operating system software used by the processor **2638** may be stored in a persistent store such as flash memory **2624,** which may instead be a read-only memory (ROM) or similar storage element (not shown). Those skilled in the art will appreciate that the operating system, specific device applications, or parts thereof, may be temporarily loaded into a volatile memory such as RAM **2626.** Received communication signals may also be stored in RAM **2626.**

As shown, flash memory **2624** can be segregated into different areas for both computer programs **2658** and program data storage **2650, 2652, 2654** and **2656.** These different storage types indicate that each program can allocate a portion of flash memory **2624** for their own data storage requirements. Processor **2638,** in addition to its operating system functions, may enable execution of software applications on the UE. A predetermined set of applications that control basic operations, including at least data and voice communication applications for example, will normally be installed on UE **2600** during manufacturing. Other applications could be installed subsequently or dynamically.

Applications and software may be stored on any computer readable storage medium. The computer readable storage medium may be a tangible or in transitory/non-transitory medium such as optical (e.g., CD, DVD, etc.), magnetic (e.g., tape) or other memory known in the art.

One software application may be a personal information manager (PIM) application having the ability to organize and manage data items relating to the user of the UE such as, but not limited to, e-mail, calendar events, voice mails, appointments, and task items. Naturally, one or more memory stores would be available on the UE to facilitate storage of PIM data items. Such PIM application may have the ability to send and receive data items, via the wireless network **2619.** Further applications may also be loaded onto the UE **2600** through the network **2619,** an auxiliary I/O subsystem **2628,** serial port **2630,** short-range communications subsystem **2640** or any other suitable subsystem **2642,** and installed by a user in the RAM **2626** or a non-volatile store (not shown) for execution by the processor **2638.** Such flexibility in application installation increases the functionality of the device and may provide enhanced on-device functions, communication-related functions, or both. For example, secure communication applications may enable electronic commerce functions and other such financial transactions to be performed using the UE **2600.**

In a data communication mode, a received signal such as a text message or web page download will be processed by the communication subsystem **2611** and input to the processor **2638,** which may further process the received signal for output to the display **2622,** or alternatively to an auxiliary I/O device **2628.**

A user of UE **2600** may also compose data items such as email messages for example, using the keyboard **2632,** which may be a complete alphanumeric keyboard or telephone-type keypad, among others, in conjunction with the display **2622** and possibly an auxiliary I/O device **2628.** Such composed items may then be transmitted over a communication network through the communication subsystem **2611.**

For voice communications, overall operation of UE **2600** is similar, except that received signals would typically be output to a speaker **2634** and signals for transmission would be generated by a microphone **2636.** Alternative voice or audio I/O subsystems, such as a voice message recording subsystem, may also be implemented on UE **2600.** Although voice or audio signal output is generally accomplished primarily through the speaker **2634,** display **2622** may also be used to provide an indication of the identity of a calling party, the duration of a voice call, or other voice call related information for example.

Serial port **2630** in **Figure 26** would normally be implemented in a personal digital assistant (PDA)-type UE for which synchronization with a user's desktop computer (not shown) may be desirable, but is an optional device component. Such a port **2630** would enable a user to set preferences through an external device or software application and would extend the capabilities of UE **2600** by providing for information or software downloads to UE **2600** other than through a wireless communication network. The alternate download path may for example be used to load an encryption key onto the device through a direct and thus reliable and trusted connection to thereby enable secure device communication. As will be appreciated by those skilled in the art, serial port **2630** can further be used to connect the UE to a computer to act as a modem.

Other communications subsystems **2640,** such as a short-range communications subsystem, is a further optional component which may provide for communication between UE **2600** and different systems or devices, which need not necessarily be similar devices. For example, the subsystem **2640** may include an infrared device and associated circuits and components or a Bluetooth™ communication module to provide for communication with similarly enabled systems and devices. Subsystem **2640** may further include non-cellular communications such as WiFi, WiMAX, or near field communications (NFC).

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

**1.** A method for adding or changing to an assisted serving cell (914) for a user equipment (910), the method comprising:

determining, at a macro cell (912) acting as a serving cell for the user equipment, that the user equipment is close to the assisted serving cell;
in response to determining that the user equipment is close to the assisted serving cell, sending (920) a configuration message to the user equipment to perform inter-frequency measurements;
in response to sending the configuration message, receiving (930), at the macro cell (912) an inter-frequency measurement report from the user equipment;
based on the inter-frequency measurement report, sending (932), from the macro cell, a preparation message to the assisted serving cell;
receiving (934), at the macro cell, an acknowledgement from the assisted serving cell;
providing (940), from the macro cell, an assisted serving cell activation message to the user equipment indicating the assisted serving cell is to act as an additional serving cell for the user equipment and is to provide user plane, U-plane, data communications with the user equipment;
receiving (966), at the macro cell, an activation complete message from the user equipment; and
sending (970), from the macro cell to a serving gateway (916) or packet data node gateway, a path switch message to switch user plane data communications of the user equipment to the assisted serving cell, the macro cell remaining a serving cell for the user equipment for providing at least control plane data communications with the user equipment.

**2.** The method of claim 1, wherein the assisted serving cell activation message contains at least one of a dedicated random access preamble and a cell radio network temporary identifier for the assisted serving cell.

**3.** The method of claim 1, wherein the acknowledgement from the assisted serving cell contains radio bearer reconfiguration information for the user equipment in the assisted serving cell.

**4.** The method of claim 3, further comprising forwarding (974) a radio bearer configuration message to the user equipment from the macro cell.

**5.** The method of claim 1, wherein the sending the path switch message further comprises providing the path switch message to switch a user-plane data path from the serving gateway or packet data node gateway to the assisted serving cell from a former assisted serving cell.

**6.** The method of claim 1, further comprising deactivating (1070) a former assisted serving cell (1014).

**7.** A macro cell enabled for adding or changing to an assisted serving cell for a user equipment, the macro cell comprising:

a processor; and
a communications subsystem,

wherein the macro cell acts as a serving cell for the user equipment and is enabled to:

determine that the user equipment is close to the assisted serving cell;
in response to determining that the user equipment is close to the assisted serving cell, send (920) a configuration message to the user equipment to perform inter-frequency measurements;
in response to sending the configuration message, receive an inter-frequency measurement report from the user equipment;
based on the inter-frequency measurement report, send a preparation message to the assisted serving cell;
receive an acknowledgement from the assisted serving cell;
provide an assisted serving cell activation message to the user equipment indicating the assisted serving cell is to act as an additional serving cell for the user equipment and is to provide user plane, U-plane, data communications with the user equipment;
receive an activation complete message from the user equipment; and
send, from the macro cell to a serving gateway or packet data node gateway, a path switch message to switch user plane data communications of the user equipment to the assisted serving cell, the macro cell remaining a serving cell for the user equipment for providing at least control plane data communications with the user equipment.

**8.** The macro cell of claim 7, wherein the assisted serving cell activation message contains at least one of a dedicated random access preamble and a cell radio network temporary identifier for the assisted serving cell.

**9.** The macro cell of claim 7, wherein the acknowledgement from the assisted serving cell contains radio bearer reconfiguration information for the user equipment in the assisted serving cell.

**10.** The macro cell of claim 9, wherein the macro cell is further enabled to forward a radio bearer configuration message to the user equipment from the macro cell.

**11.** The macro cell of claim 7, wherein the macro cell is enabled to send the path switch message to switch a user-plane data path from the serving gateway or packet data node gateway to the assisted serving cell from a former assisted serving cell.

**Patentansprüche**

1. Verfahren zum Hinzufügen zu oder Ändern einer unterstützten Bedienzelle (914) für ein Benutzergerät (910), das Verfahren Folgendes umfassend:

   Bestimmen, an einer Makrozelle (912), die als Bedienzelle für das Benutzergerät dient,
   dass sich das Benutzergerät in der Nähe der unterstützten Bedienzelle befindet;
   als Reaktion auf die Bestimmung, dass sich das Benutzergerät in der Nähe der unterstützten Bedienzelle befindet, Senden (920) einer Konfigurationsnachricht an das Benutzergerät zur Durchführung von Zwischenfrequenzmessungen;
   als Reaktion auf das Senden der Konfigurationsnachricht, Empfangen (930), an der Makrozelle (912) eines Zwischenfrequenz-Messberichts vom Benutzergerät;
   auf der Grundlage des Zwischenfrequenz-Messberichts, Senden (932), von der Makrozelle, einer Vorbereitungsnachricht an die unterstützte Bedienzelle;
   Empfangen (934), an der Makrozelle, einer Bestätigung von der unterstützten Bedienzelle;
   Bereitstellen (940), von der Makrozelle, einer Aktivierungsnachricht für eine unterstützte Bedienzelle an das Benutzergerät, die anzeigt, dass die unterstützte Bedienzelle als zusätzliche Bedienzelle für das Benutzergerät fungieren soll und eine Benutzerebenen-Datenkommunikation (U-Ebene) mit dem Benutzergerät bereitstellen soll;
   Empfangen (966), an der Makrozelle, einer Aktivierungsvollständigkeitsnachricht vom Benutzergerät; und
   Senden (970), von der Makrozelle zu einem bedienenden Gateway (916) oder einem Paketdatenknoten-Gateway, einer Pfadvermittlungsnachricht, um eine Benutzerebenen-Datenkommunikation des Benutzergeräts an die unterstützte Bedienzelle zu vermitteln,
   wobei die Makrozelle eine bedienende Zelle für das Benutzergerät bleibt, um zumindest eine Steuerebenen-Datenkommunikation mit dem Benutzergerät bereitzustellen.

2. Verfahren nach Anspruch 1, wobei die Aktivierungsnachricht für die unterstützte Bedienzelle mindestens eine dedizierte Präambel mit wahlfreiem Zugriff und/oder eine temporäre Zellfunknetzkennung für die unterstützte Bedienzelle enthält.

3. Verfahren nach Anspruch 1, wobei die Bestätigung von der unterstützten Bedienzelle Funkträger-Rekonfigurationsinformationen für das Benutzergerät in der unterstützten Bedienzelle enthält.

4. Verfahren nach Anspruch 3, ferner umfassend das Weiterleiten (974) einer Funkträgerkonfigurationsnachricht an das Benutzergerät von der Makrozelle aus.

5. Verfahren nach Anspruch 1, wobei das Senden der Pfadvermittlungsnachricht ferner das Bereitstellen der Pfadvermittlungsnachricht umfasst, um einen Benutzerebenen-Datenpfad von dem bedienenden Gateway oder dem Paketdatenknoten-Gateway zu der unterstützten Bedienzelle von einer ehemaligen unterstützten Bedienzelle zu vermitteln.

6. Verfahren nach Anspruch 1, ferner umfassend das Deaktivieren (1070) einer ehemaligen unterstützten Bedienzelle (1014).

7. Makrozelle, die zum Hinzufügen oder Ändern zu einer unterstützten Bedienzelle für ein Benutzergerät befähigt ist, wobei die Makrozelle Folgendes umfasst:

   einen Prozessor; und
   ein Kommunikations-Subsystem, wobei die Makrozelle als Bedienzelle für das Benutzergerät fungiert und zu Folgendem befähigt ist:

      Bestimmen, dass sich das Benutzergerät in der Nähe der unterstützten Bedienzelle befindet;
      als Reaktion auf die Bestimmung, dass sich das Benutzergerät in der Nähe der unterstützten Bedienzelle befindet, Senden (920) einer Konfigurationsnachricht an das Benutzergerät zur Durchführung von Zwischenfrequenzmessungen;
      als Reaktion auf das Senden der Konfigurationsnachricht, Empfangen eines Zwischenfrequenz-Messberichts vom Benutzergerät;
      auf der Grundlage des Zwischenfrequenz-Messberichts, Senden einer Vorbereitungsnachricht an die unterstützte Bedienzelle;
Empfangen einer Bestätigung von der unterstützten Bedienzelle;
Bereitstellen einer Aktivierungsnachricht für die unterstützte Bedienzelle an das Benutzergerät, die anzeigt, dass die unterstützte Bedienzelle als zusätzliche Bedienzelle für das Benutzergerät fungieren und eine Benutzerebenen-Datenkommunikation (U-Ebene) mit dem Benutzergerät bereitstellen soll;
Empfangen einer Aktivierungsvollständigkeitsnachricht vom Benutzergerät; und
Senden, von der Makrozelle zu einem bedienenden Gateway oder einem Paketdatenknoten-Gateway, einer Pfadvermittlungsnachricht, um eine Benutzerebenen-Datenkommunikation des Benutzergeräts an die unterstützte Bedienzelle zu vermitteln, wobei die Makrozelle eine bedienende Zelle für das Benutzergerät bleibt, um zumindest eine Steuerebenen-Datenkommunikation mit dem Benutzergerät bereitzustellen.

**8.** Makrozelle nach Anspruch 7, wobei die Aktivierungsnachricht für die unterstützte Bedienzelle mindestens eine dedizierte Präambel mit wahlfreiem Zugriff und/oder eine temporäre Zellfunknetzkennung für die unterstützte Bedienzelle enthält.

**9.** Makrozelle nach Anspruch 7, wobei die Bestätigung von der unterstützten Bedienzelle Funkträger-Rekonfigurationsinformationen für das Benutzergerät in der unterstützten Bedienzelle enthält.

**10.** Makrozelle nach Anspruch 9, wobei die Makrozelle ferner dazu befähigt ist, eine Funkträgerkonfigurationsnachricht an das Benutzergerät von der Makrozelle aus weiterzuleiten.

**11.** Makrozelle nach Anspruch 7, wobei die Makrozelle dazu befähigt ist, die Pfadvermittlungsnachricht zu senden, um einen Benutzerebenen-Datenpfad von dem bedienenden Gateway oder dem Paketdatenknoten-Gateway zu der unterstützten Bedienzelle von einer ehemaligen unterstützten Bedienzelle zu vermitteln.

## Revendications

**1.** Procédé d'ajout ou de changement d'une cellule de desserte assistée (914) pour un équipement utilisateur (910), le procédé comprenant :

la détermination, au niveau d'une macrocellule (912) agissant en tant que cellule de desserte pour l'équipement utilisateur, du fait que l'équipement utilisateur est proche de la cellule de desserte assistée ;
en réponse à la détermination du fait que l'équipement utilisateur est proche de la cellule de desserte assistée, l'envoi (920) d'un message de configuration à l'équipement utilisateur pour effectuer des mesures inter-fréquences ;
en réponse à l'envoi du message de configuration, la réception (930), au niveau de la macrocellule (912), d'un rapport de mesures inter-fréquences provenant de l'équipement utilisateur ;
sur la base du rapport de mesures inter-fréquences, l'envoi (932), à partir de la macrocellule, d'un message de préparation à la cellule de desserte assistée ;
la réception (934), au niveau de la macrocellule, d'un accusé de réception provenant de la cellule de desserte assistée ;
la fourniture (940), à partir de la macrocellule, d'un message d'activation de cellule de desserte assistée à l'équipement utilisateur indiquant que la cellule de desserte assistée doit agir en tant que cellule de desserte supplémentaire pour l'équipement utilisateur et doit fournir des communications de données de plan utilisateur, plan U, à l'équipement utilisateur ;
la réception (966), au niveau de la macrocellule, d'un message d'activation terminée provenant de l'équipement utilisateur ; et
l'envoi (970), à partir de la macrocellule à une passerelle de desserte (916) ou à une passerelle de noeud de données paquets, d'un message de commutation de chemin pour commuter des communications de données de plan utilisateur de l'équipement utilisateur vers la cellule de desserte assistée, la macrocellule demeurant une cellule de desserte pour l'équipement utilisateur destinée à fournir au moins des communications de données de plan de contrôle à l'équipement utilisateur.

**2.** Procédé selon la revendication 1, dans lequel le message d'activation de cellule de desserte assistée contient un préambule d'accès aléatoire dédié et/ou un identifiant temporaire de réseau radio cellulaire pour la cellule de desserte assistée.

3. Procédé selon la revendication 1, dans lequel l'accusé de réception de la cellule de desserte assistée contient des informations de reconfiguration de support radio pour l'équipement utilisateur dans la cellule de desserte assistée.

4. Procédé selon la revendication 3, comprenant en outre la transmission (974) d'un message de configuration de support radio à l'équipement utilisateur provenant de la macrocellule.

5. Procédé selon la revendication 1, dans lequel l'envoi du message de commutation de chemin comprend en outre la fourniture du message de commutation de chemin pour commuter un chemin de données de plan utilisateur à partir de la passerelle de desserte ou de la passerelle de nœud de données paquets vers la cellule de desserte assistée à partir d'une ancienne cellule de desserte assistée.

6. Procédé selon la revendication 1, comprenant en outre la désactivation (1070) d'une ancienne cellule de desserte assistée (1014).

7. Une macrocellule activée pour l'ajout ou la modification d'une cellule de desserte assistée pour un équipement utilisateur, la macrocellule comprenant :

un processeur ; et
un sous-système de communications, la macrocellule agissant comme une cellule de desserte pour l'équipement utilisateur et étant activée pour :

déterminer le fait que l'équipement utilisateur est proche de la cellule de desserte assistée ;
en réponse à la détermination du fait que l'équipement utilisateur est proche de la cellule de desserte assistée, envoyer (920) un message de configuration à l'équipement utilisateur pour effectuer des mesures inter-fréquences ;
en réponse à l'envoi du message de configuration, recevoir un rapport de mesures inter-fréquences provenant de l'équipement utilisateur ;
sur la base du rapport de mesure inter-fréquences, envoyer un message de préparation à la cellule de desserte assistée ;
recevoir un accusé de réception provenant de la cellule de desserte assistée ;
fournir un message d'activation de cellule de desserte assistée à l'équipement utilisateur indiquant que la cellule de desserte assistée doit agir en tant que cellule de desserte supplémentaire pour l'équipement utilisateur et doit fournir des communications de données de plan utilisateur, plan U, à l'équipement utilisateur ;
recevoir un message d'activation terminée provenant de l'équipement utilisateur ; et
envoyer, à partir de la macrocellule à une passerelle de desserte ou à une passerelle de nœud de données paquets, un message de commutation de chemin pour commuter des communications de données de plan utilisateur de l'équipement utilisateur vers la cellule de desserte assistée, la macrocellule demeurant une cellule de desserte pour l'équipement utilisateur destinée à fournir au moins des communications de données de plan de contrôle à l'équipement utilisateur.

8. Macrocellule selon la revendication 7, dans laquelle le message d'activation de cellule de desserte assistée contient au moins l'un parmi un préambule d'accès aléatoire dédié et un identifiant temporaire de réseau radio cellulaire pour la cellule de desserte assistée.

9. Macrocellule selon la revendication 7, dans laquelle l'accusé de réception de la cellule de desserte assistée contient des informations de reconfiguration de support radio pour l'équipement utilisateur dans la cellule de desserte assistée.

10. Macrocellule selon la revendication 9, dans laquelle la macrocellule est en outre activée pour transmettre un message de configuration de support radio à l'équipement utilisateur à partir de la macrocellule.

11. Macrocellule selon la revendication 7, dans laquelle la macrocellule est activée pour envoyer le message de commutation de chemin pour commuter un chemin de données de plan utilisateur à partir de la passerelle de desserte ou de la passerelle de nœud de données paquets vers la cellule de desserte assistée à partir d'une ancienne cellule de desserte assistée.

1/20

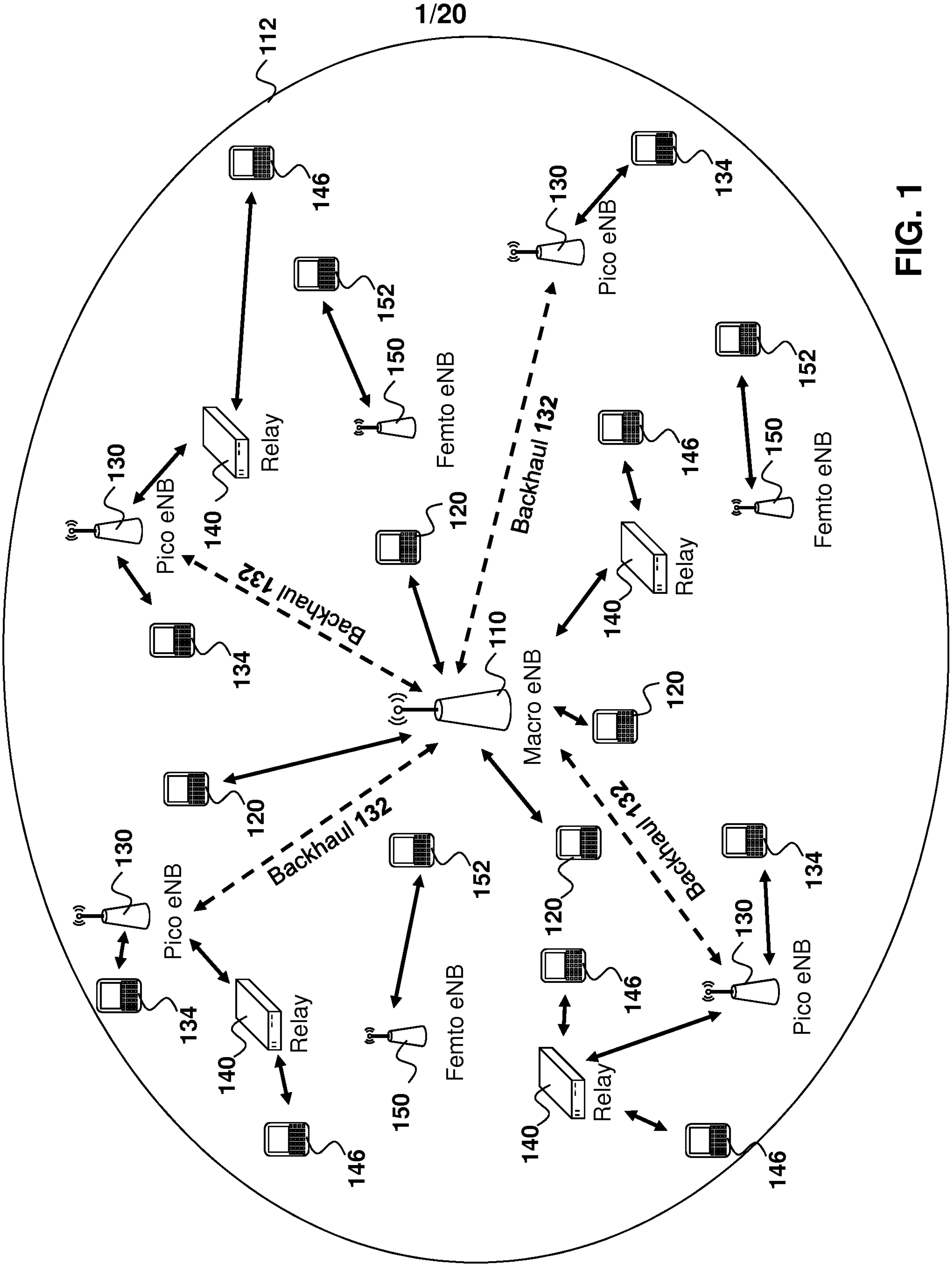
112
Macro eNB
110
Pico eNB
130
Backhaul 132
Relay
140
Femto eNB
150
120
134
146
152

FIG. 1

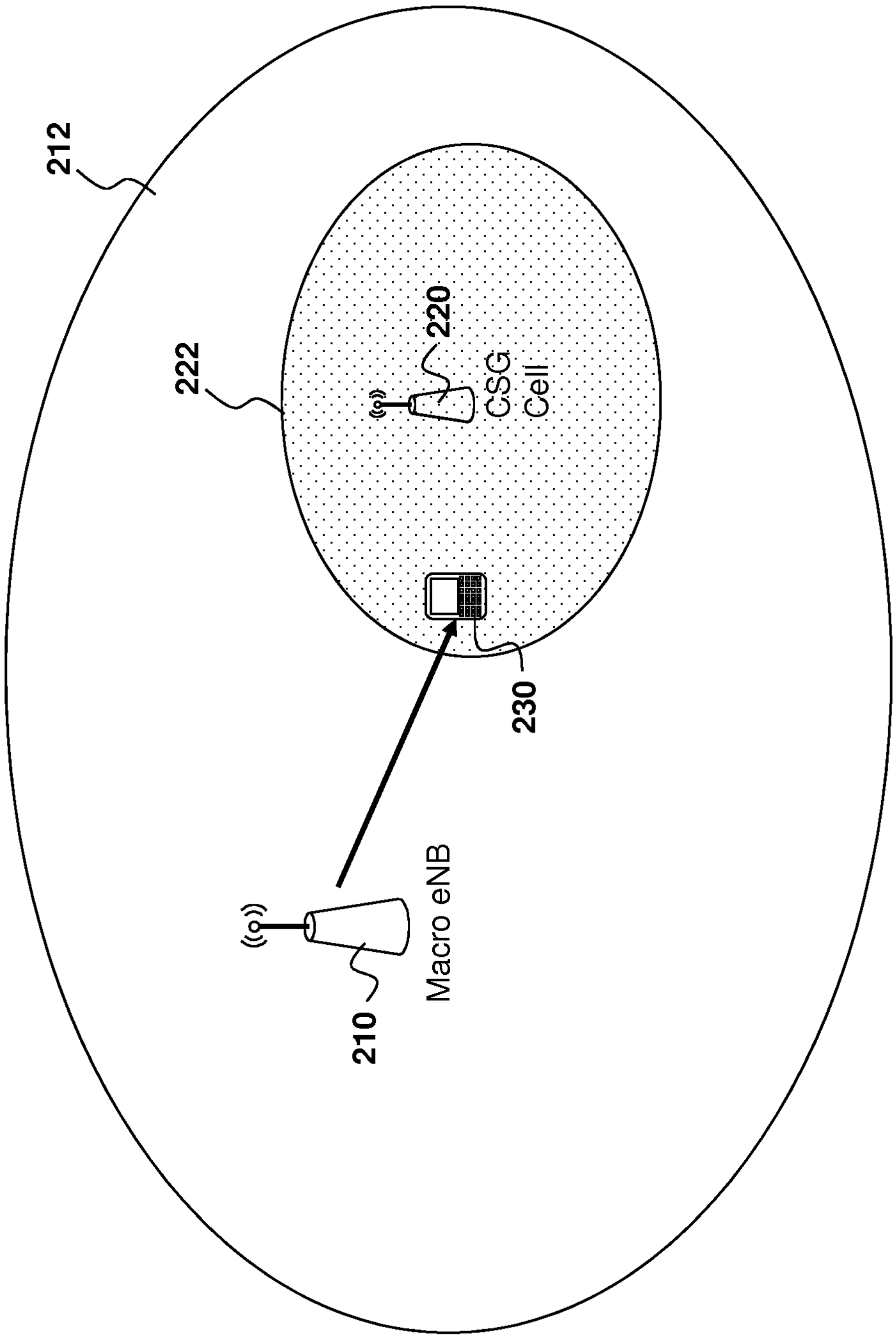


FIG. 2

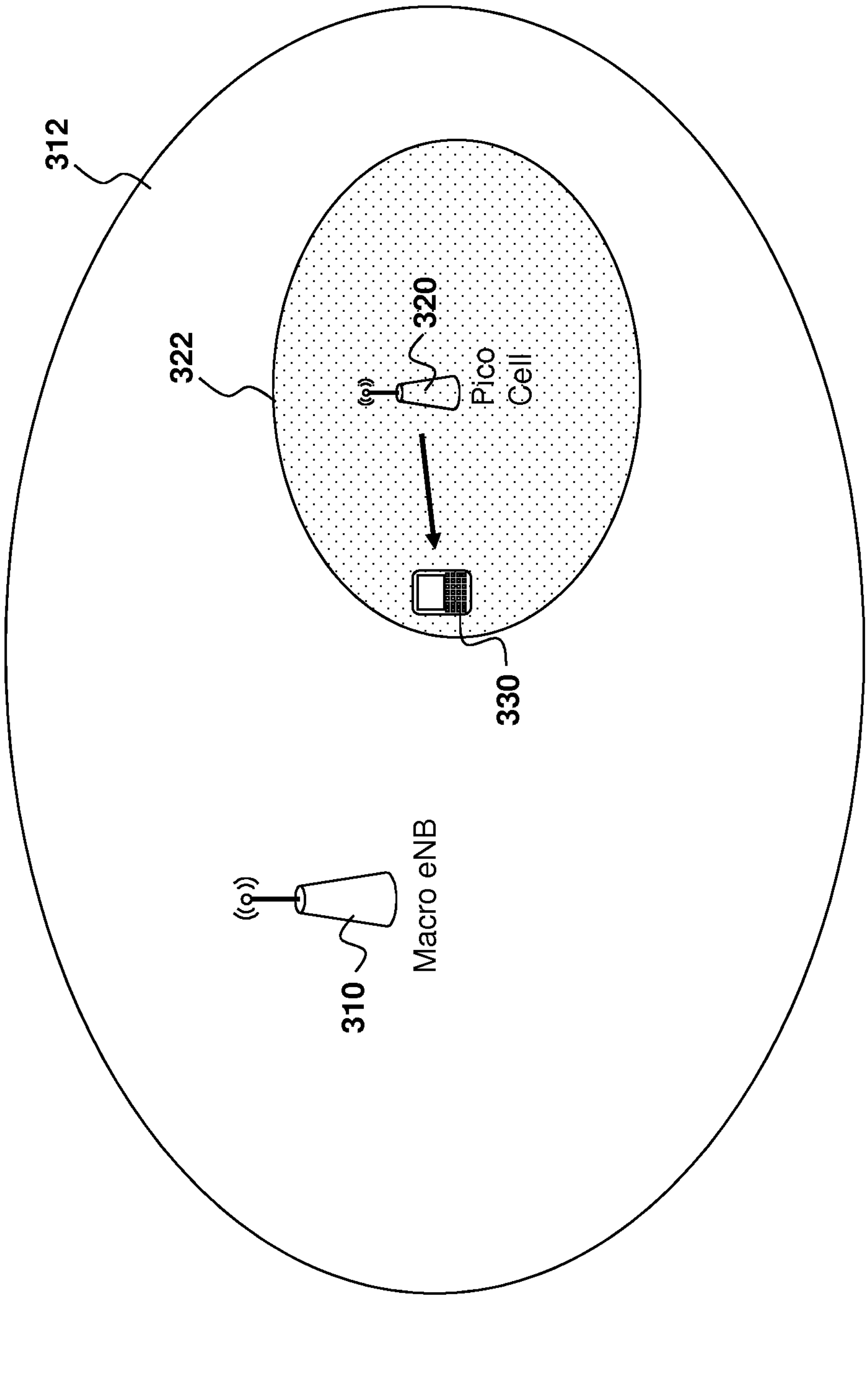


FIG. 3

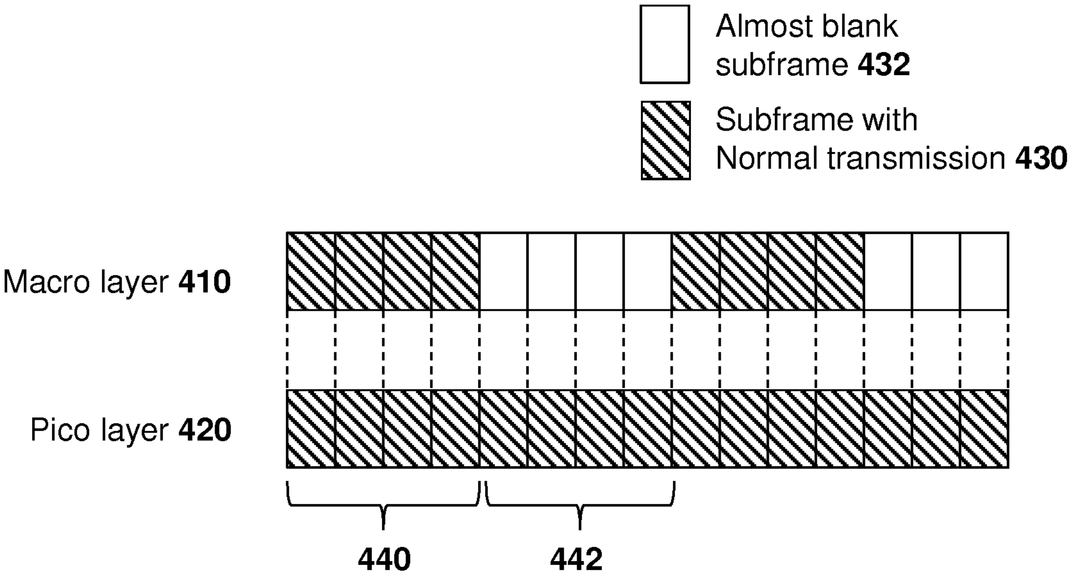
Almost blank subframe 432
Subframe with Normal transmission 430
Macro layer 410
Pico layer 420
440
442

FIG. 4

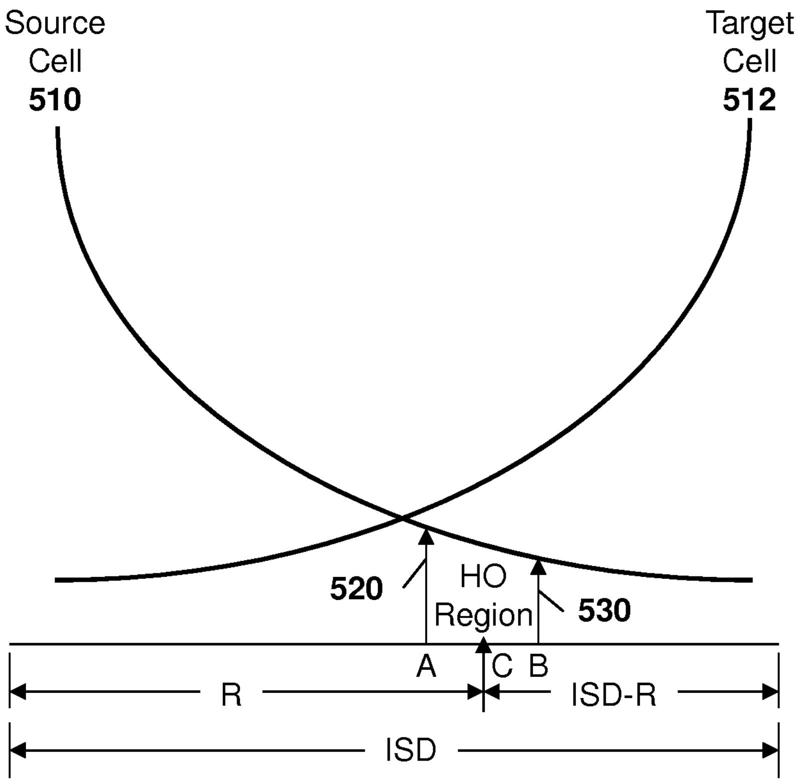
Source Cell 510
Target Cell 512
520
HO Region
530
A
C
B
R
ISD-R
ISD

FIG. 5

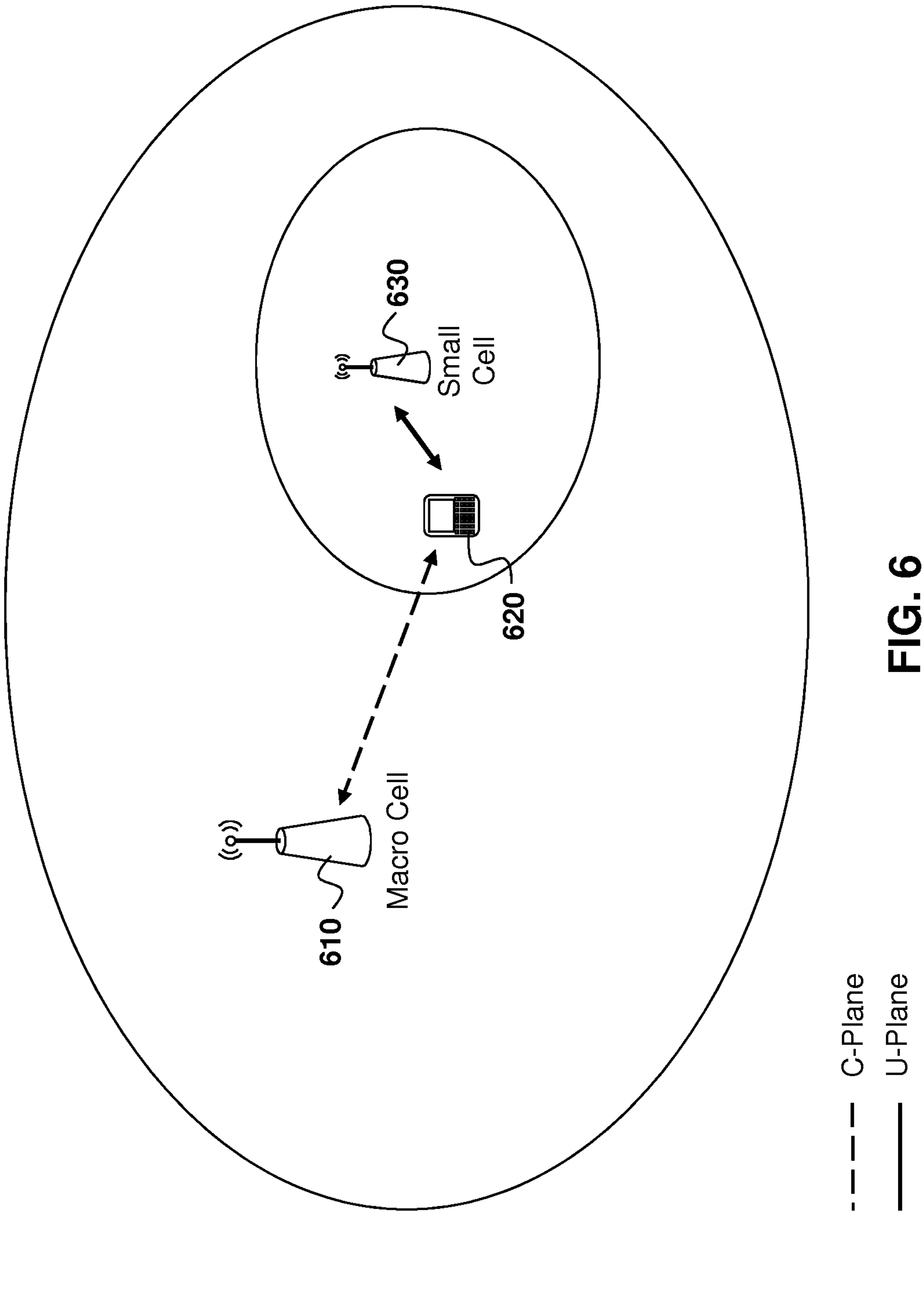


FIG. 6

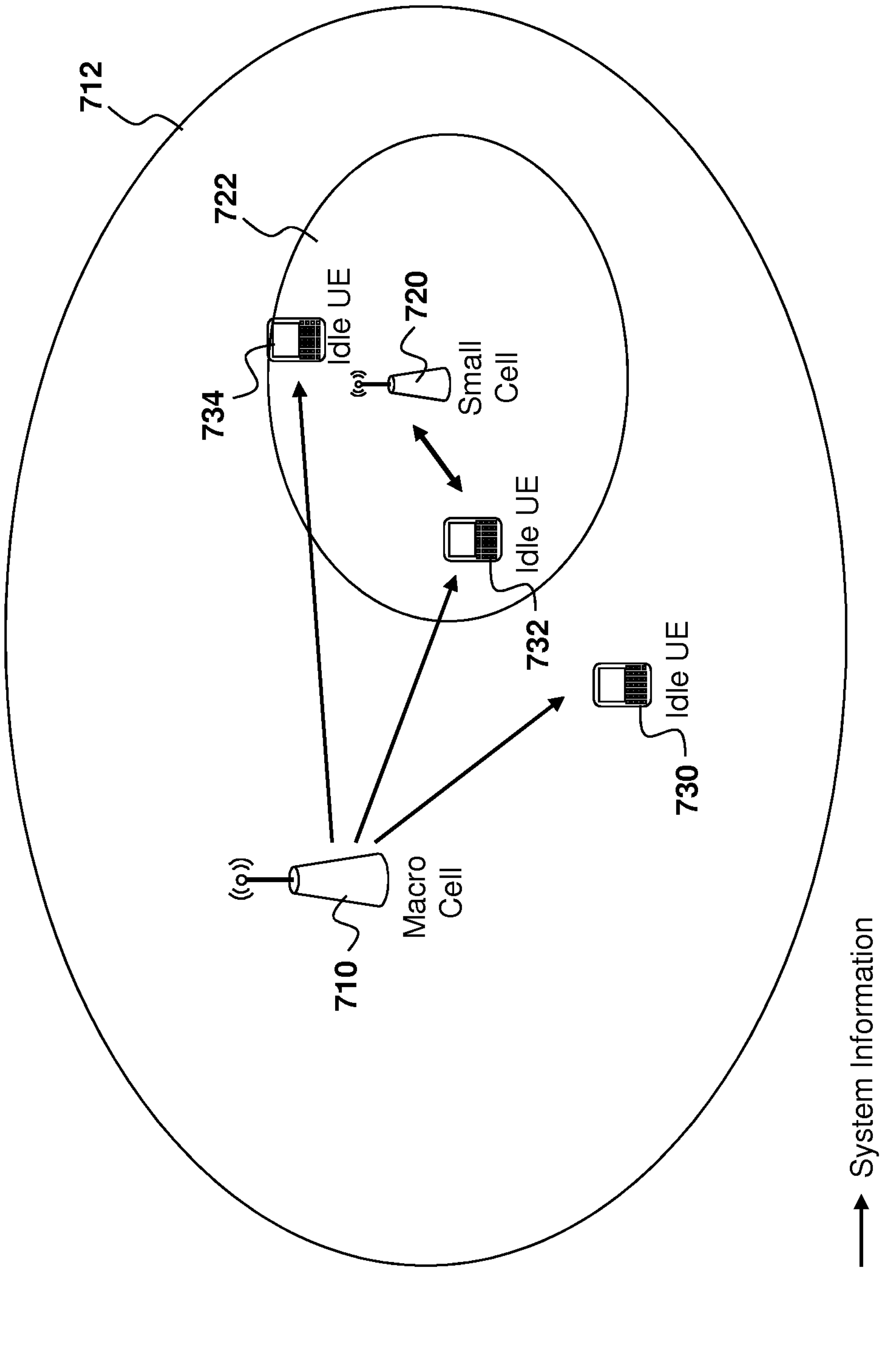
712
722
734
Idle UE
720
Small Cell
Idle UE
732
Idle UE
730
Macro Cell
710
System Information

FIG. 7

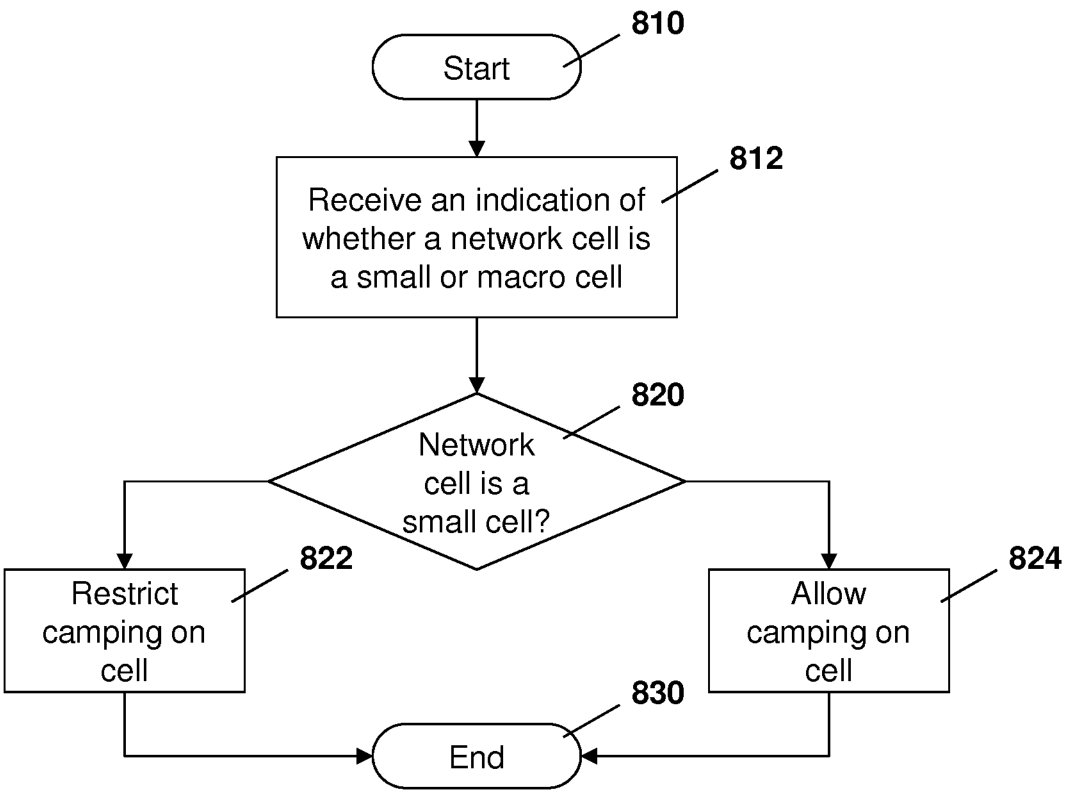

810
Start
812
Receive an indication of whether a network cell is a small or macro cell
820
Network cell is a small cell?
822
Restrict camping on cell
824
Allow camping on cell
830
End


FIG. 8

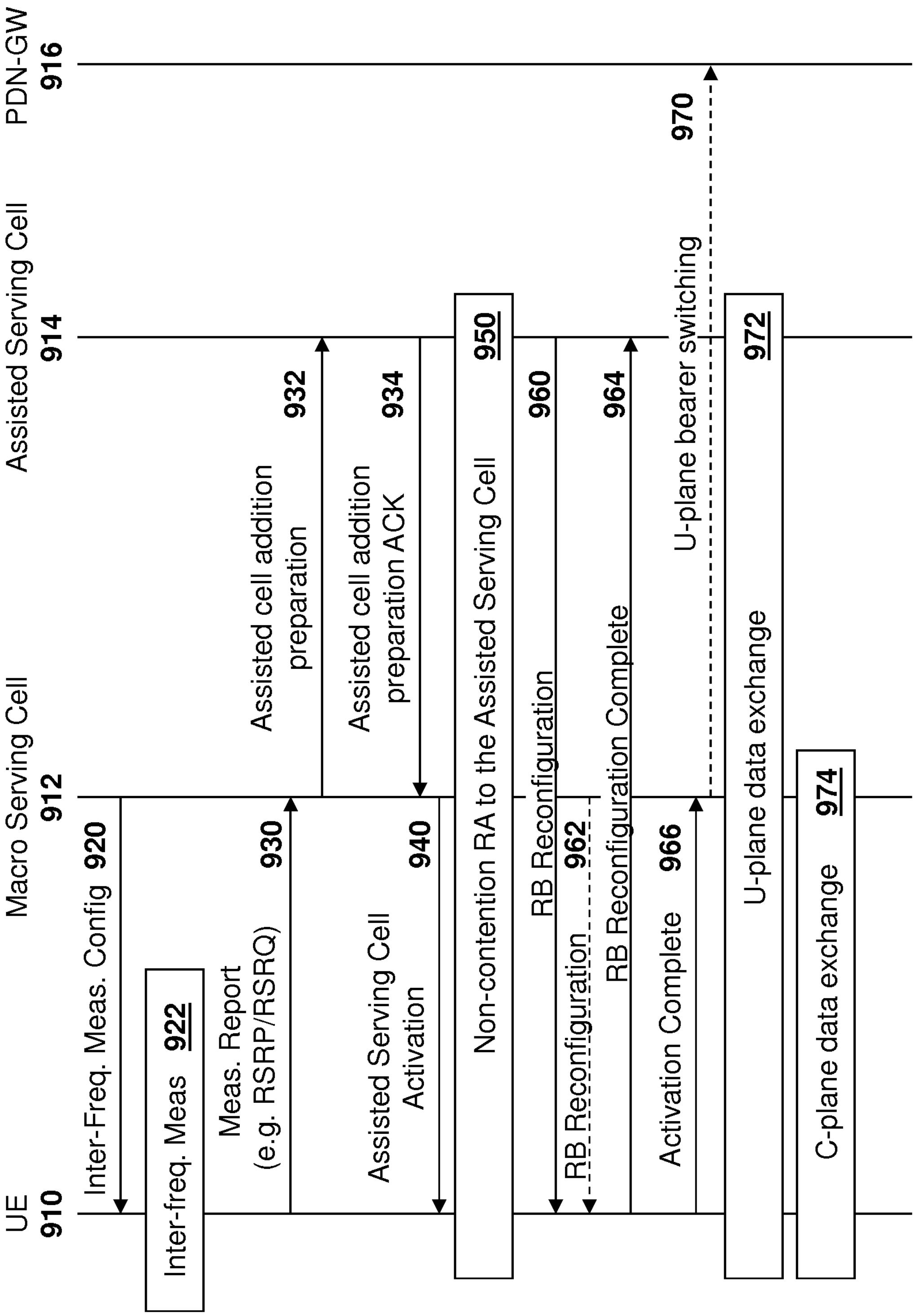
UE
910
Macro Serving Cell
912
Assisted Serving Cell
914
S-GW/
PDN-GW
916
Inter-Freq. Meas. Config 920
Inter-freq. Meas 922
Meas. Report
(e.g. RSRP/RSRQ)
930
Assisted cell addition
preparation
932
Assisted cell addition
preparation ACK
934
Assisted Serving Cell
Activation
940
Non-contention RA to the Assisted Serving Cell
950
RB Reconfiguration
960
RB Reconfiguration 962
RB Reconfiguration Complete
964
Activation Complete 966
U-plane bearer switching
970
U-plane data exchange
972
C-plane data exchange
974

FIG. 9

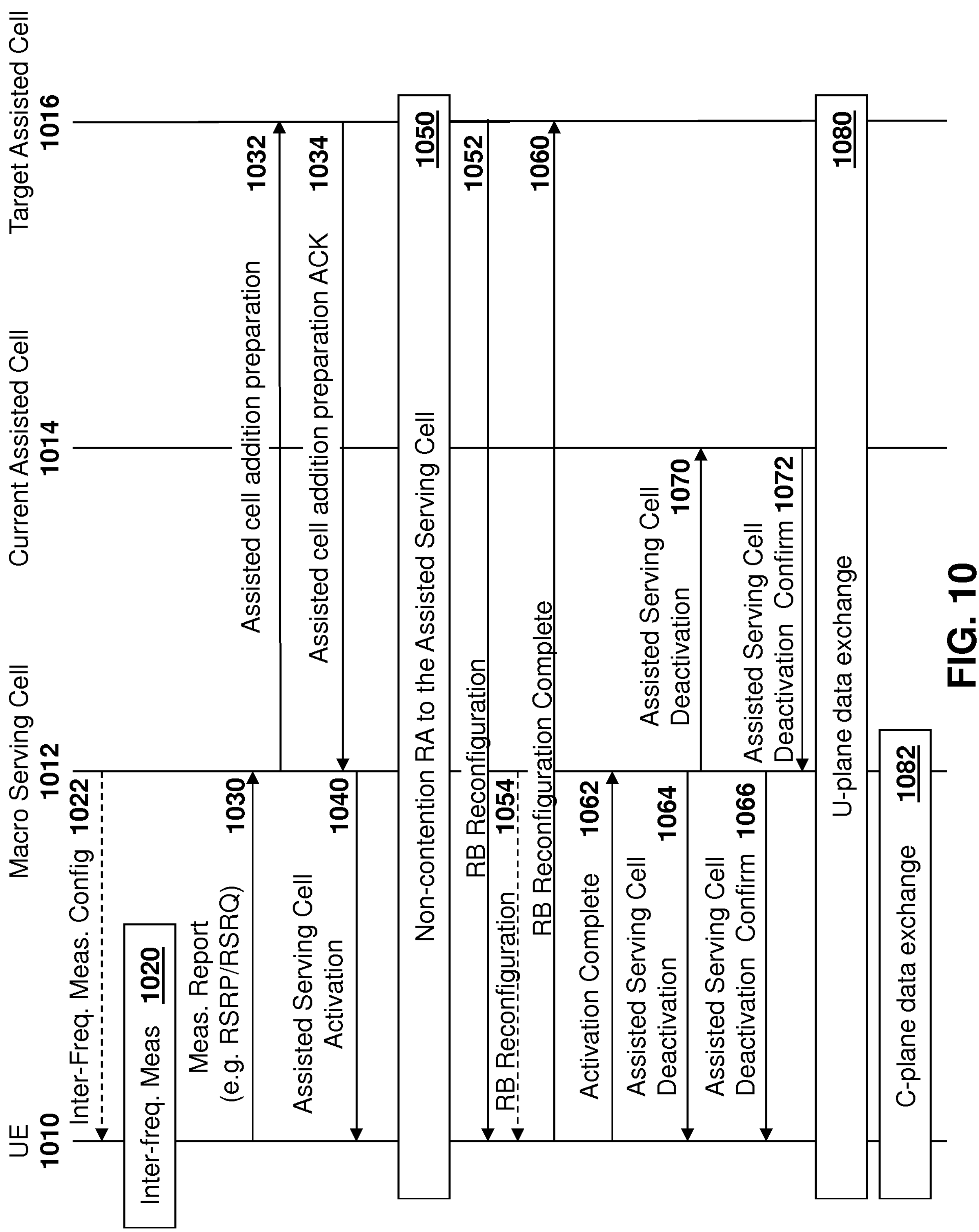
UE
1010
Macro Serving Cell
1012
Current Assisted Cell
1014
Target Assisted Cell
1016
Inter-Freq. Meas. Config 1022
Inter-freq. Meas 1020
Meas. Report
(e.g. RSRP/RSRQ)
1030
Assisted cell addition preparation
1032
Assisted cell addition preparation ACK
1034
Assisted Serving Cell
Activation
1040
Non-contention RA to the Assisted Serving Cell
1050
RB Reconfiguration
1052
RB Reconfiguration
1054
RB Reconfiguration Complete
1060
Activation Complete
1062
Assisted Serving Cell
Deactivation
1064
Assisted Serving Cell
Deactivation
1070
Assisted Serving Cell
Deactivation Confirm
1066
Assisted Serving Cell
Deactivation Confirm 1072
U-plane data exchange
1080
C-plane data exchange
1082

FIG. 10

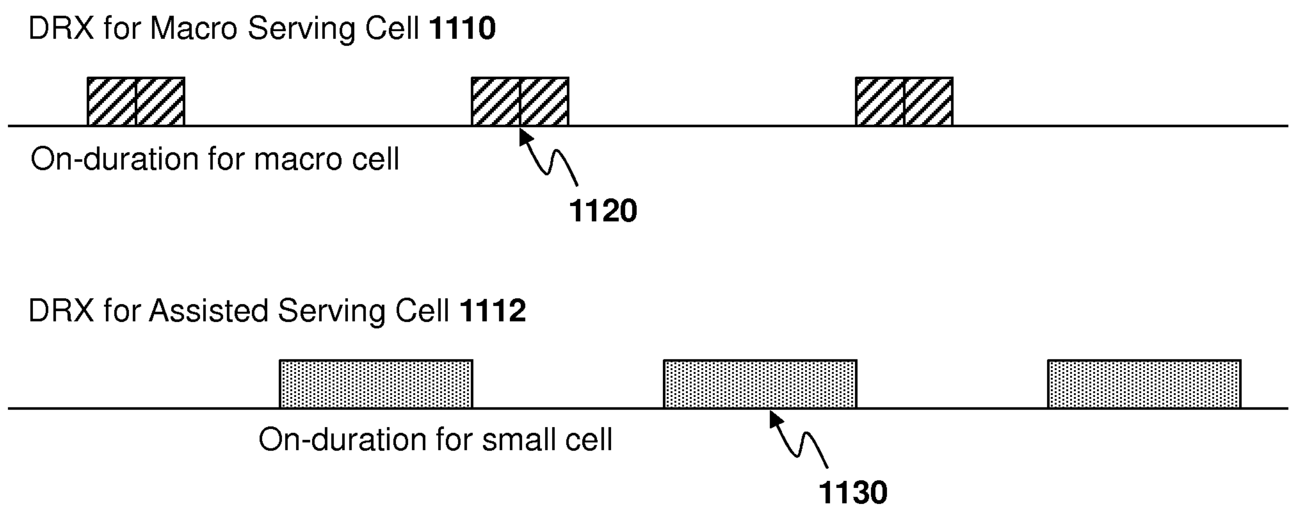
DRX for Macro Serving Cell 1110
On-duration for macro cell
1120
DRX for Assisted Serving Cell 1112
On-duration for small cell
1130

FIG. 11

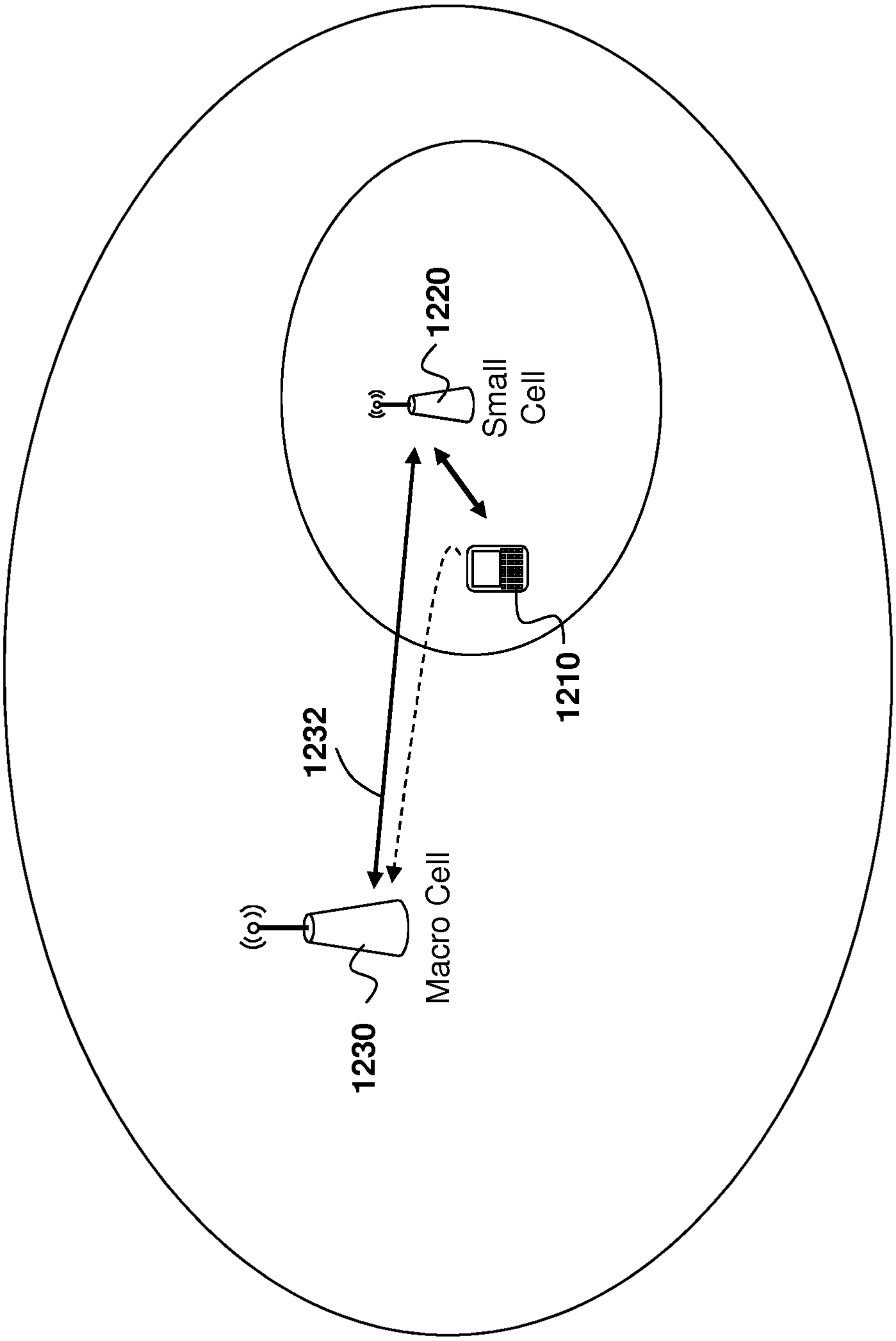


FIG. 12

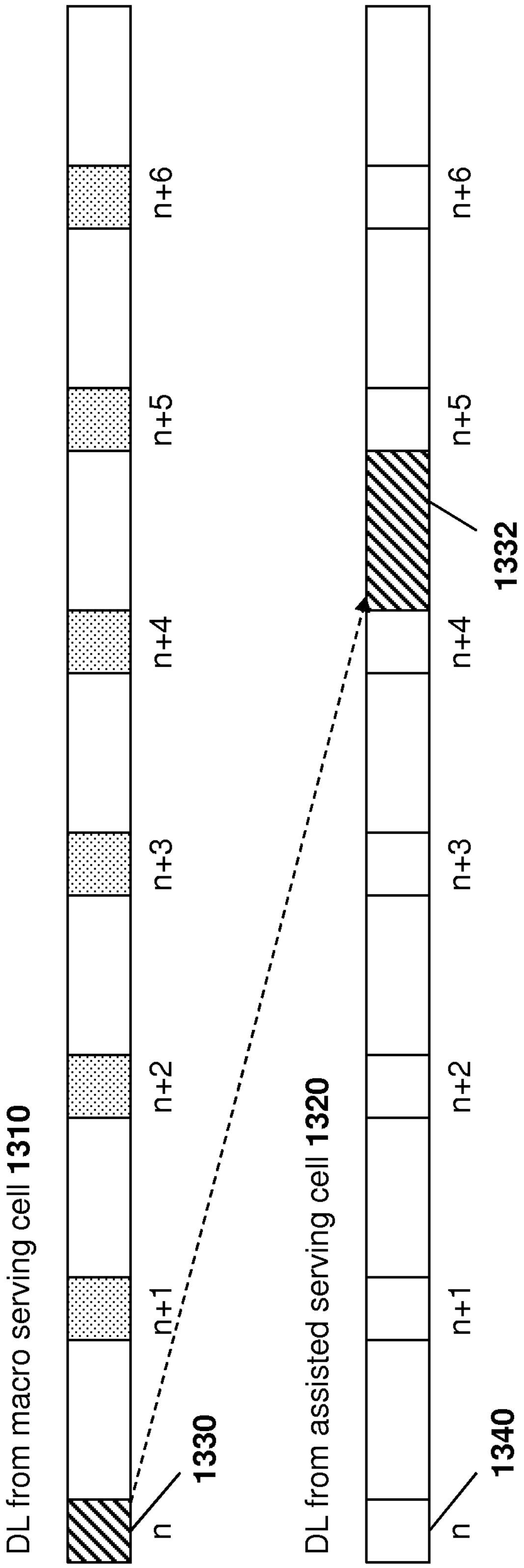
DL from macro serving cell 1310
n
n+1
n+2
n+3
n+4
n+5
n+6
1330
DL from assisted serving cell 1320
1340
1332

FIG. 13

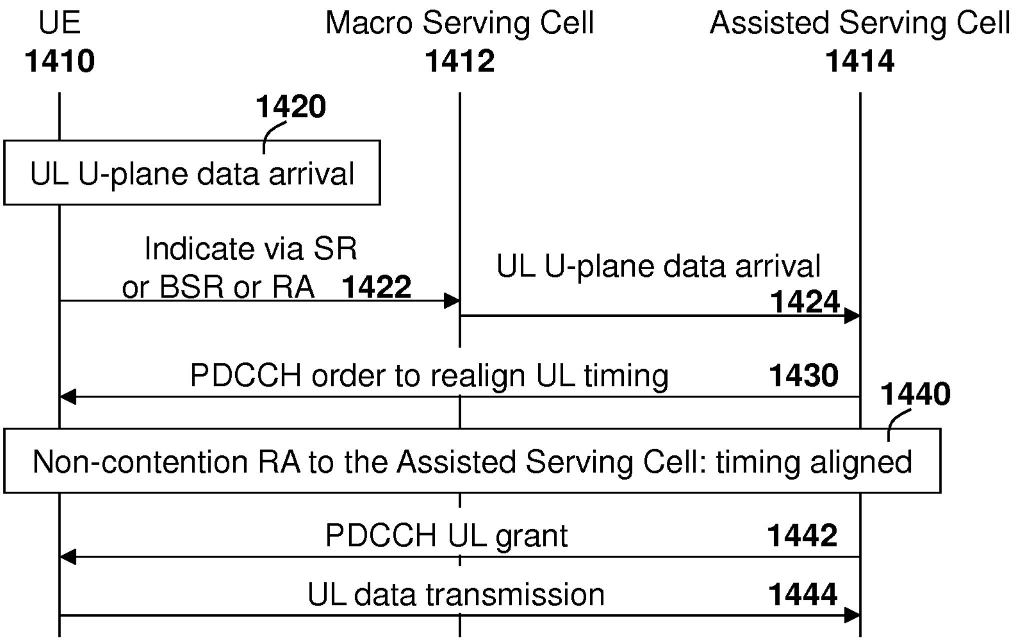
UE
1410
Macro Serving Cell
1412
Assisted Serving Cell
1414
1420
UL U-plane data arrival
Indicate via SR
or BSR or RA 1422
UL U-plane data arrival
1424
PDCCH order to realign UL timing 1430
1440
Non-contention RA to the Assisted Serving Cell: timing aligned
PDCCH UL grant 1442
UL data transmission 1444

FIG. 14

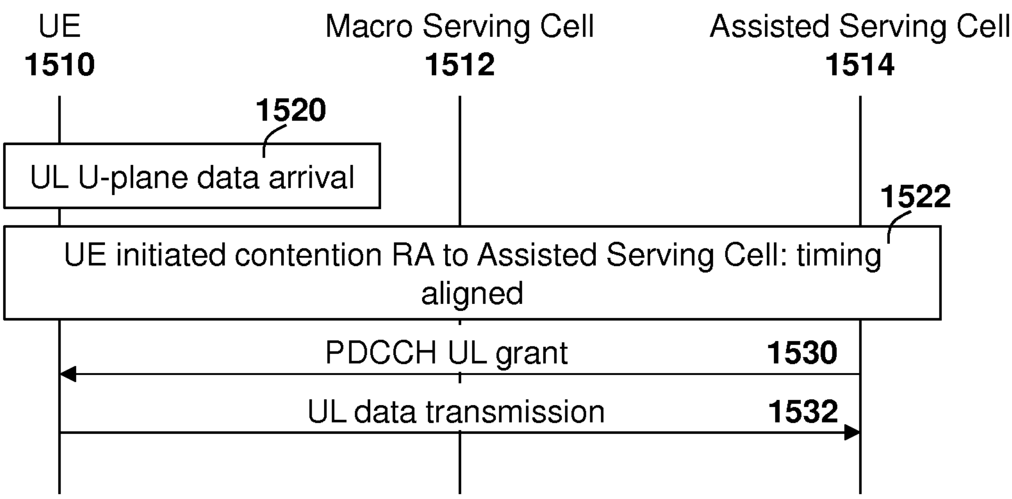
UE
1510
Macro Serving Cell
1512
Assisted Serving Cell
1514
1520
UL U-plane data arrival
1522
UE initiated contention RA to Assisted Serving Cell: timing aligned
PDCCH UL grant 1530
UL data transmission 1532

FIG. 15

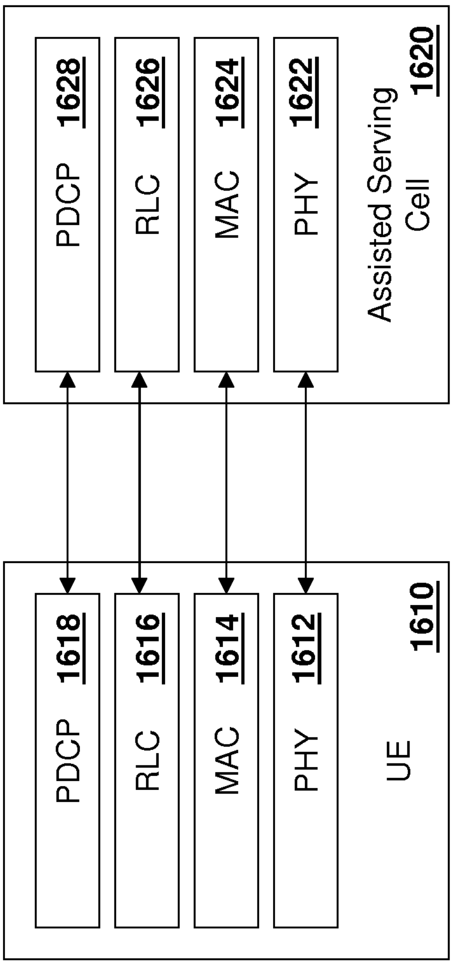
PDCP 1618
RLC 1616
MAC 1614
PHY 1612
UE
1610
PDCP 1628
RLC 1626
MAC 1624
PHY 1622
Assisted Serving Cell
1620

FIG. 16

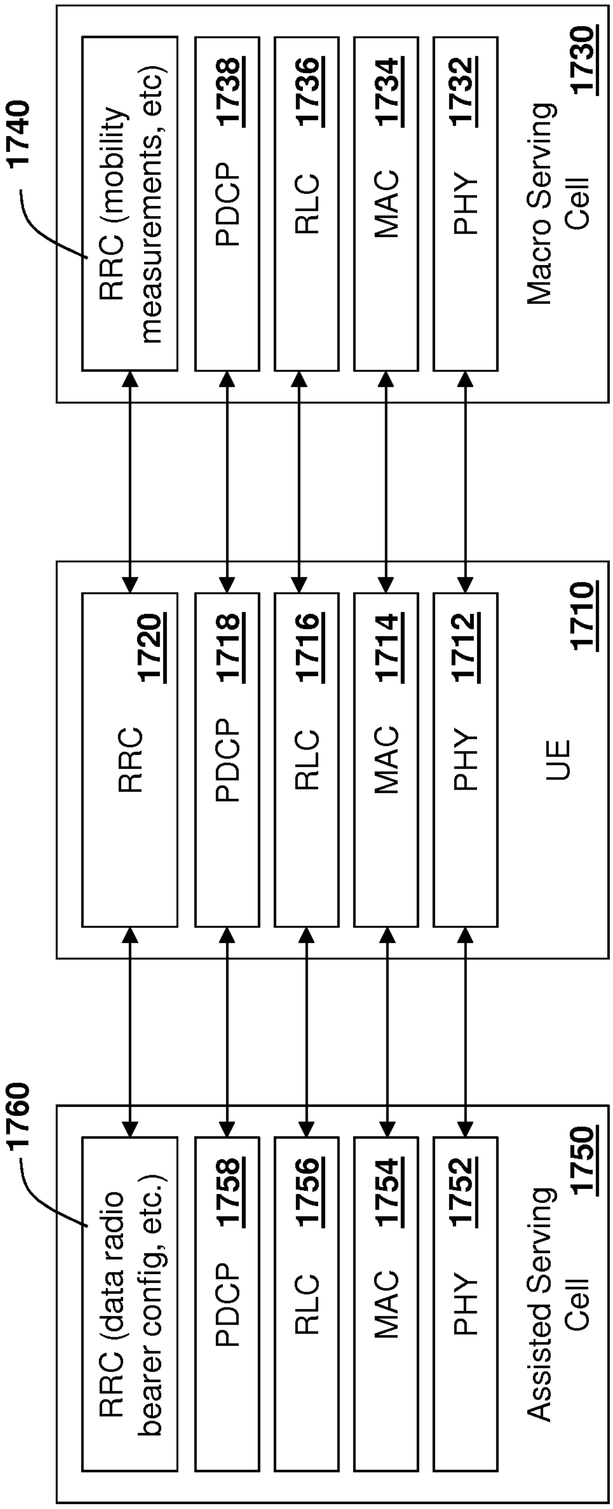
1760
RRC (data radio bearer config, etc.)
PDCP 1758
RLC 1756
MAC 1754
PHY 1752
Assisted Serving Cell
1750
RRC 1720
PDCP 1718
RLC 1716
MAC 1714
PHY 1712
UE
1710
1740
RRC (mobility measurements, etc)
PDCP 1738
RLC 1736
MAC 1734
PHY 1732
Macro Serving Cell
1730

FIG. 17

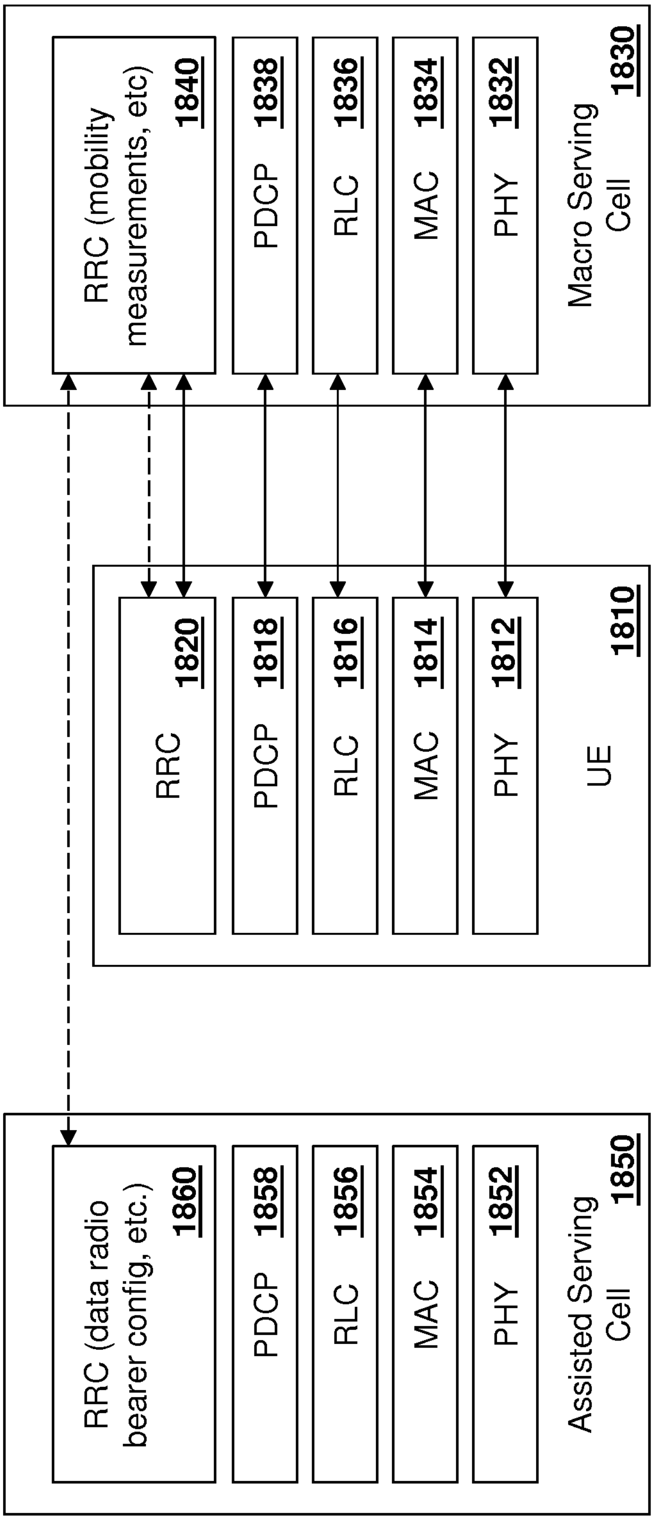
RRC (mobility measurements, etc)
1840
PDCP
1838
RLC
1836
MAC
1834
PHY
1832
Macro Serving Cell
1830
RRC
1820
PDCP
1818
RLC
1816
MAC
1814
PHY
1812
UE
1810
RRC (data radio bearer config, etc.)
1860
PDCP
1858
RLC
1856
MAC
1854
PHY
1852
Assisted Serving Cell
1850

FIG. 18

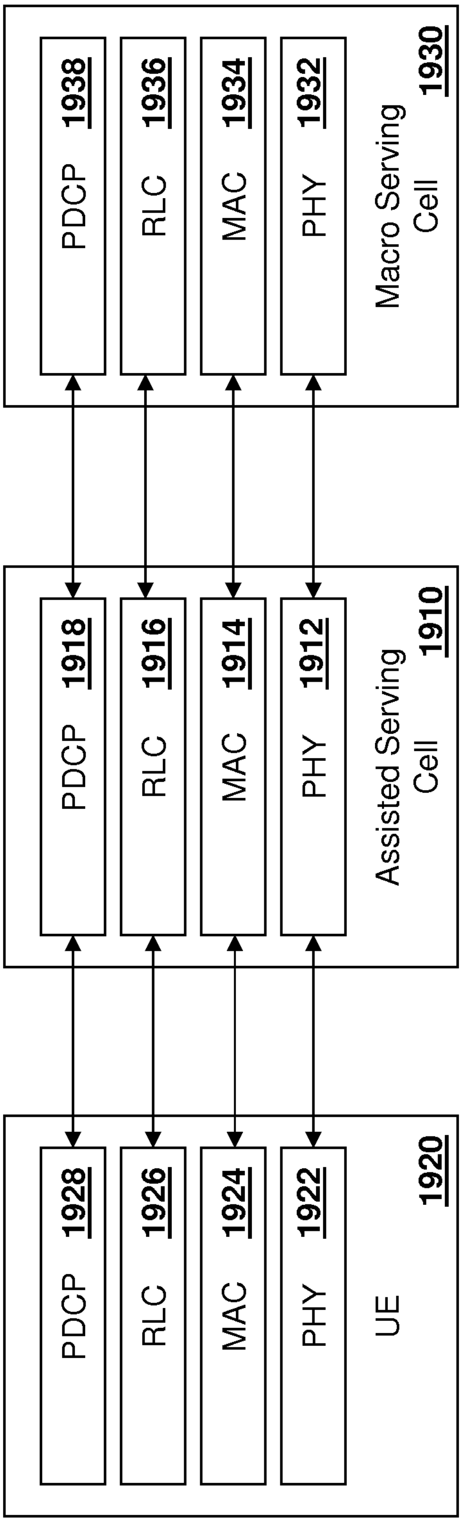
PDCP 1938
RLC 1936
MAC 1934
PHY 1932
Macro Serving Cell 1930
PDCP 1918
RLC 1916
MAC 1914
PHY 1912
Assisted Serving Cell 1910
PDCP 1928
RLC 1926
MAC 1924
PHY 1922
UE 1920

FIG. 19

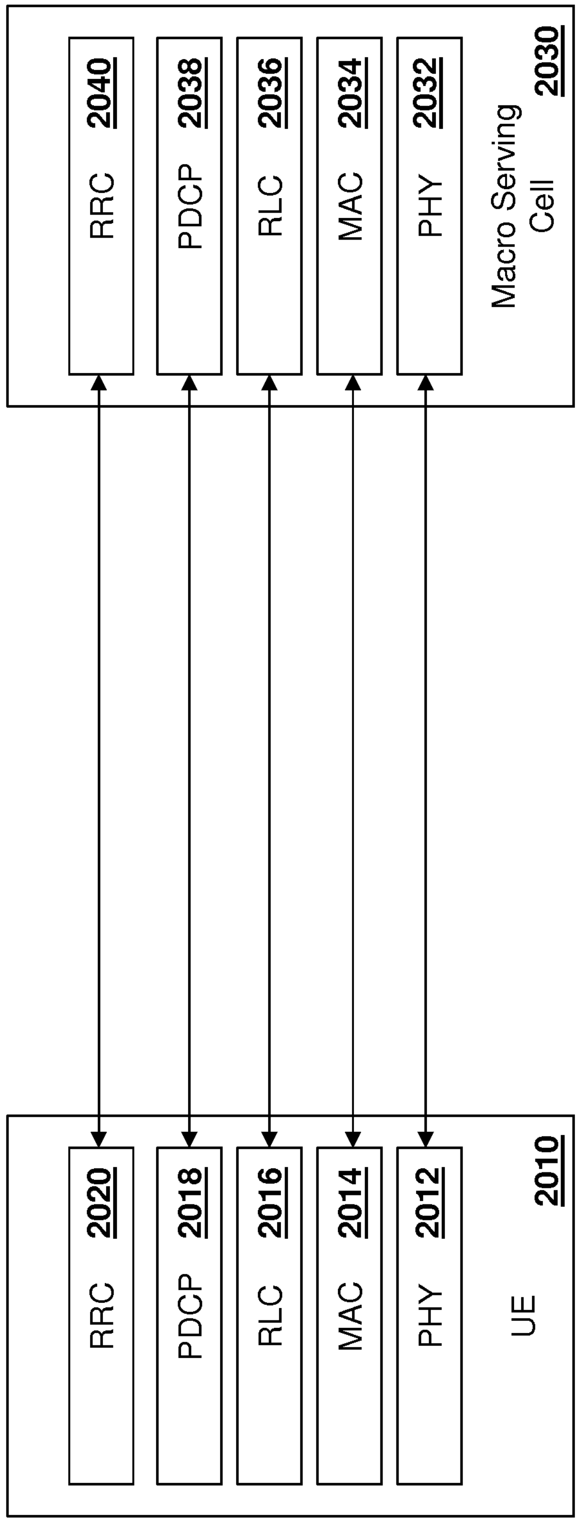
RRC 2040
PDCP 2038
RLC 2036
MAC 2034
PHY 2032
Macro Serving Cell 2030
RRC 2020
PDCP 2018
RLC 2016
MAC 2014
PHY 2012
UE 2010

FIG. 20

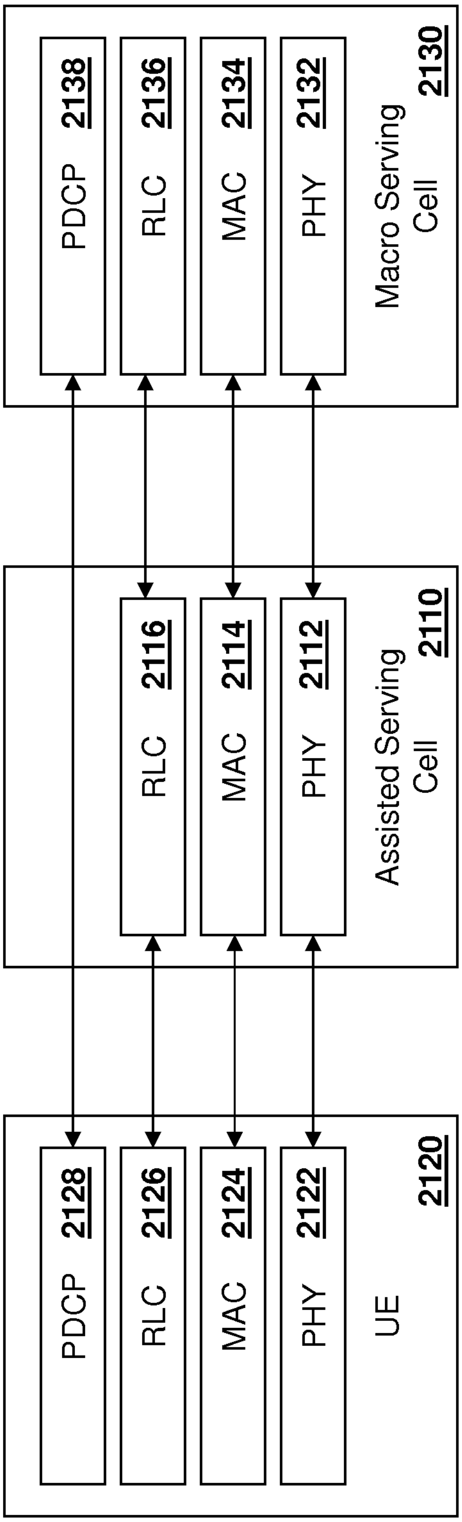
PDCP 2138
RLC 2136
MAC 2134
PHY 2132
Macro Serving Cell
2130
RLC 2116
MAC 2114
PHY 2112
Assisted Serving Cell
2110
PDCP 2128
RLC 2126
MAC 2124
PHY 2122
UE
2120

FIG. 21

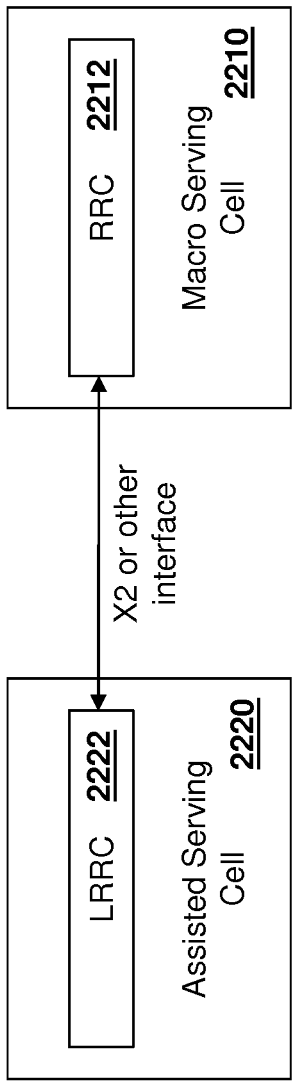
RRC 2212
Macro Serving Cell
2210
X2 or other interface
LRRC 2222
Assisted Serving Cell
2220

FIG. 22

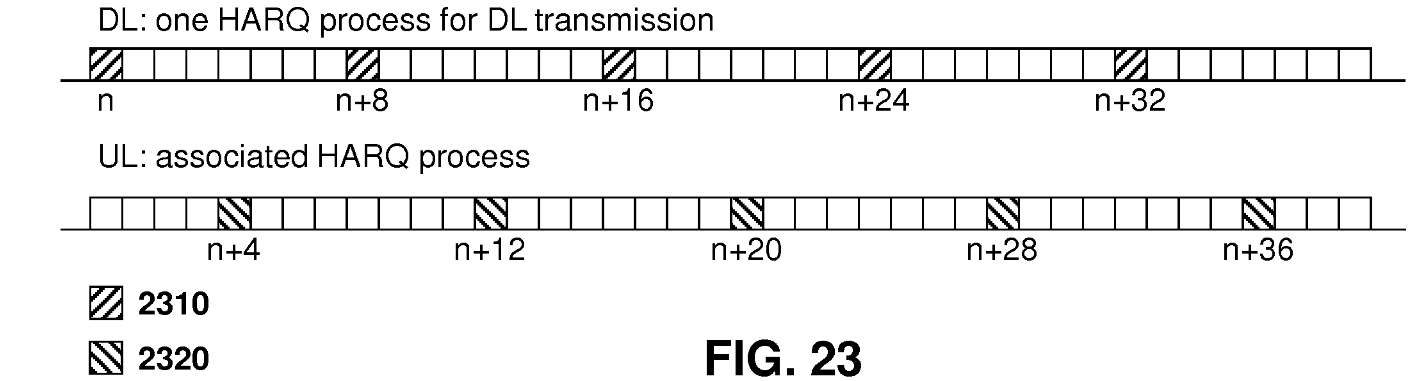
DL: one HARQ process for DL transmission
n
n+8
n+16
n+24
n+32
UL: associated HARQ process
n+4
n+12
n+20
n+28
n+36
2310
2320

FIG. 23

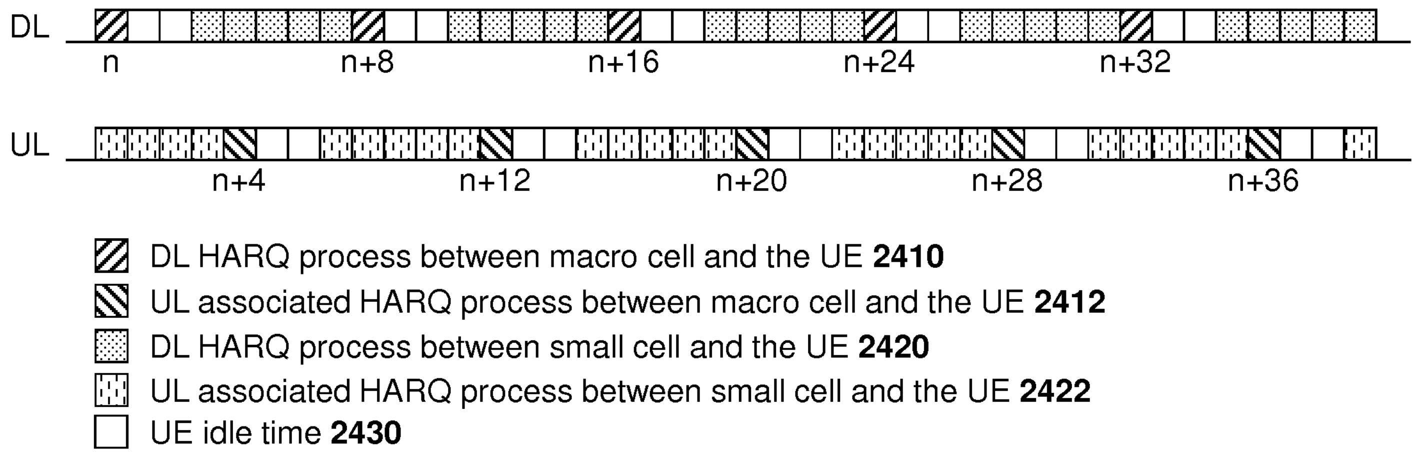
DL
n
n+8
n+16
n+24
n+32
UL
n+4
n+12
n+20
n+28
n+36
DL HARQ process between macro cell and the UE 2410
UL associated HARQ process between macro cell and the UE 2412
DL HARQ process between small cell and the UE 2420
UL associated HARQ process between small cell and the UE 2422
UE idle time 2430

FIG. 24

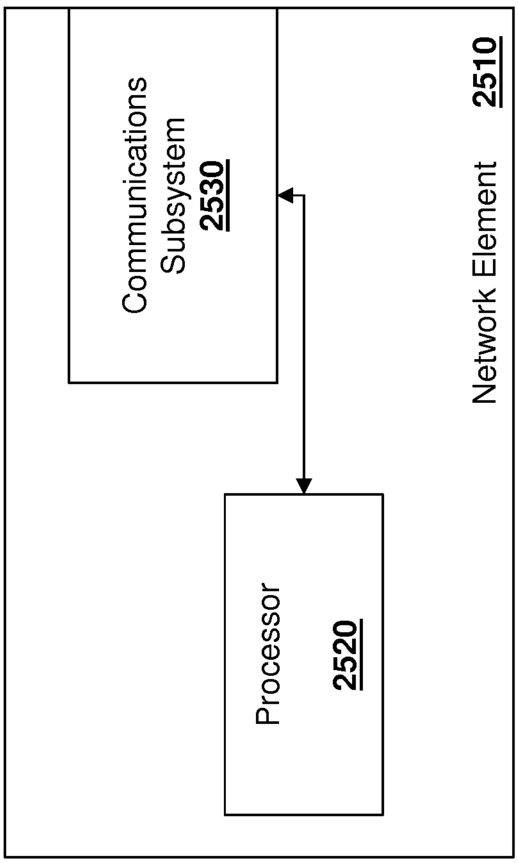
Communications Subsystem
2530
Processor
2520
Network Element
2510

FIG. 25

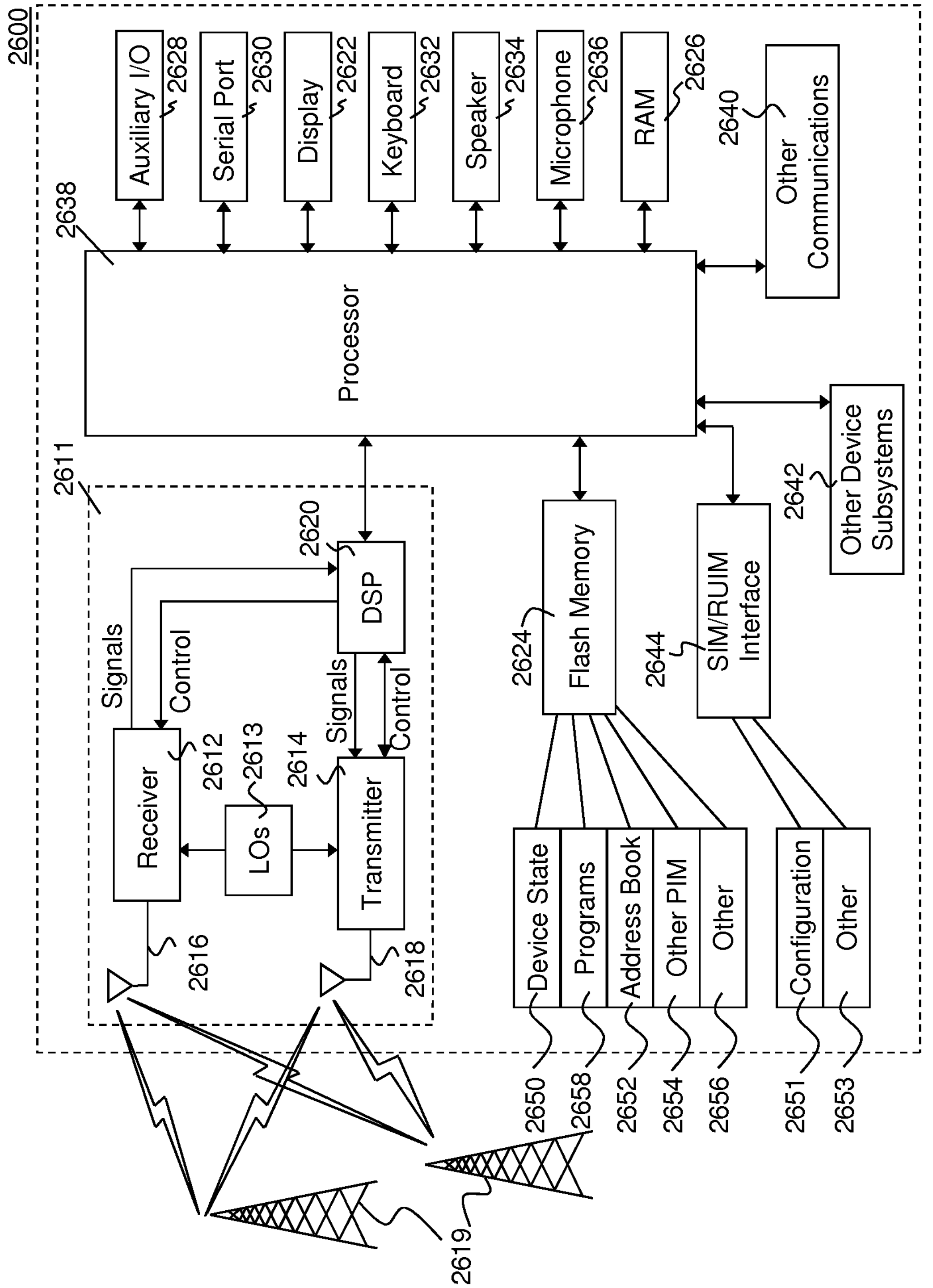
2600
Auxiliary I/O
2628
Serial Port
2630
Display
2622
Keyboard
2632
Speaker
2634
Microphone
2636
RAM
2626
2640
Other Communications
2638
Processor
2611
2620
DSP
Signals
Control
Receiver
2612
LOs
2613
Transmitter
2614
Signals
Control
2616
2618
Flash Memory
2624
SIM/RUIM Interface
2644
Other Device Subsystems
2642
Device State
Programs
Address Book
Other PIM
Other
Configuration
Other
2650
2658
2652
2654
2656
2651
2653
2619

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2713653 A